(19) **Europäisches Patentamt**
**European Patent Office**
**Office européen des brevets**

(11) **EP 3 961 484 B1**

(12) **EUROPEAN PATENT SPECIFICATION**

(45) Date of publication and mention
of the grant of the patent:
**17.07.2024 Bulletin 2024/29**

(51) International Patent Classification (IPC):
**G06V 10/42** (2022.01)     **G06V 10/82** (2022.01)
**G06V 10/44** (2022.01)     **G06V 10/80** (2022.01)
**G06T 7/11** (2017.01)     **G06T 7/174** (2017.01)

(21) Application number: **20793969.5**

(22) Date of filing: **27.03.2020**

(52) Cooperative Patent Classification (CPC):
**G06T 7/11; G06N 3/045; G06T 7/174; G06V 10/42;**
**G06V 10/44; G06V 10/811; G06V 10/82;**
G06N 3/08; G06T 2207/10081; G06T 2207/10088;
G06T 2207/20016; G06T 2207/20021;
G06T 2207/20081; G06T 2207/20084;
G06T 2207/20221;     (Cont.)

(86) International application number:
**PCT/CN2020/081660**

(87) International publication number:
**WO 2020/215985 (29.10.2020 Gazette 2020/44)**

(54) **MEDICAL IMAGE SEGMENTATION METHOD AND DEVICE, ELECTRONIC DEVICE AND STORAGE MEDIUM**

VERFAHREN UND VORRICHTUNG ZUR SEGMENTIERUNG MEDIZINISCHER BILDER, ELEKTRONISCHE VORRICHTUNG UND SPEICHERMEDIUM

PROCÉDÉ ET DISPOSITIF DE SEGMENTATION D'IMAGE MÉDICALE, DISPOSITIF ÉLECTRONIQUE ET SUPPORT D'INFORMATIONS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **22.04.2019 CN 201910322783**

(43) Date of publication of application:
**02.03.2022 Bulletin 2022/09**

(73) Proprietor: **Tencent Technology (Shenzhen)**
**Company Limited**
**Shenzhen, Guangdong, 518057 (CN)**

(72) Inventors:
• **CAO, Shilei**
**Shenzhen, Guangdong 518057, (CN)**
• **WANG, Renzhen**
**Shenzhen, Guangdong 518057, (CN)**
• **MA, Kai**
**Shenzhen, Guangdong 518057, (CN)**

• **ZHENG, Yefeng**
**Shenzhen, Guangdong 518057, (CN)**

(74) Representative: **Eisenführ Speiser**
**Patentanwälte Rechtsanwälte PartGmbB**
**Postfach 10 60 78**
**28060 Bremen (DE)**

(56) References cited:
WO-A1-2018/153319     CN-A- 108 447 052
CN-A- 109 427 052     CN-A- 109 598 732
CN-A- 110 110 617     US-A1- 2019 156 144

• SWATI ZAR NAWAB KHAN ET AL:
"Content-Based Brain Tumor Retrieval for MR
Images Using Transfer Learning", IEEE ACCESS,
vol. 7, 14 January 2019 (2019-01-14), pages 17809
- 17822, XP011709180, DOI:
10.1109/ACCESS.2019.2892455

• **TORRENTS-BARRENA JORDINA ET AL: "Segmentation and classification in MRI and US fetal imaging: Recent trends and future prospects", MEDICAL IMAGE ANALYSIS, OXFORD UNIVERSITY PRESS, OXOFRD, GB, vol. 51, 19 October 2018 (2018-10-19), pages 61 - 88, XP085544957, ISSN: 1361-8415, DOI: 10.1016/J.MEDIA.2018.10.003**

(52) Cooperative Patent Classification (CPC): (Cont.)
G06T 2207/30056; G06V 2201/031

**Description**

RELATED APPLICATION

The present disclosure claims priority to Chinese Patent Application No. 2019103227838, entitled "METHOD AND APPARATUS FOR SEGMENTING MEDICAL IMAGE, ELECTRONIC DEVICE, AND STORAGE MEDIUM" and filed with the China National Intellectual Property Agency on April 22, 2019.

FIELD OF THE TECHNOLOGY

The present disclosure relates to the technical field of artificial intelligence (AI), and specifically, to medical image processing.

BACKGROUND OF THE DISCLOSURE

The developing artificial intelligence (AI) is more and more widely applied to the field of medical care, in particular, to segmentation of medical images. Segmentation of liver images is taken as an example. A two-dimensional (2D) convolution neural network for segmenting liver images slice by slice may be trained in advance. Then, a to-be-segmented three-dimensional (3D) liver image, for example, a computed tomography (CT) image of a liver, is processed to obtain slices. The slices are inputted into the trained 2D convolution neural network for segmentation, to obtain a segmentation result, such as a liver region.

The foregoing 2D convolution neural network needs to slice a 3D medical image before performing the slice-by-slice segmentation, and correlation between image segments during a scan is ignored. Therefore, it is very difficult to capture shape information of a target object (for example, a liver) accurately, resulting in low segmentation accuracy. Patent document with publication No. WO2018153319A1 provide a method for detecting an object from a single image, where multiple fused feature maps are predicted from the image to obtain data concerning target regions.

SUMMARY

A method and an apparatus for segmenting a medical image and a storage medium are provided according to embodiments of the present disclosure, which is capable to improve accuracy of segmentation.

The invention is defined in the appended claims.

In the embodiments of the present disclosure, after the slice pair is obtained, the feature extraction may be performed on each slice in the slice pair based on the different receptive fields, to obtain the high-level feature information and the low-level feature information of each slice. Then, in one aspect, the target object in each slice in the slice pair is segmented according to the low-level feature information and the high-level feature information of said slice, to obtain an initial segmentation result for said slice. In another aspect, the low-level feature information and the high-level feature information of the slices in the slice pair are fused, and correlation information between the slices in the slice pair is determined according to the fused feature information. Afterwards, the segmentation result for the slice pair is generated based on the correlation information between the slices in the slice pair and the initial segmentation results for the slices in the slice pair. Correlation among slices of a 3D medical image is considered. Accordingly, in the method according to embodiments of the present disclosure, two slices (the slice pair) are segmented at the same time, and the segmentation results are further adjusted based on a correlation relationship between the slices. Thereby, shape information of a target object (such as a liver) can be captured more accurately, improving segmentation accuracy.

BRIEF DESCRIPTION OF THE DRAWINGS

For clearer illustration of the technical solutions according to embodiments of the present disclosure or conventional techniques, hereinafter briefly described are the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.

Figure 1 is a schematic diagram of a scenario of a method for segmenting a medical image according to an embodiment of the present disclosure;

Figure 2 is a flowchart of a method for segmenting a medical image according to an embodiment of the present disclosure;

Figure 3 is a schematic diagram of a receptive field in a method for segmenting a medical image according to an embodiment of the present disclosure;

Figure 4 is a schematic structural diagram of a residual network in an image segmentation model according to an embodiment of the present disclosure;

Figure 5 is a schematic structural diagram of an image segmentation model according to an embodiment of the present disclosure;

Figure 6 is a schematic diagram of signal components in a method for segmenting a medical image according to an embodiment of the present disclosure;

Figure 7 is a schematic structural diagram of a channel attention module in an image segmentation model according to an embodiment of the present disclosure;

Figure 8 is another schematic structural diagram of an image segmentation model according to an embodiment of the present disclosure;

Figure 9 is a schematic diagram of a correlation relationship in a method for segmenting a medical image according to an embodiment of the present disclosure;

Figure 10 is another schematic diagram of a correlation relationship in a method for segmenting a medical image according to an embodiment of the present disclosure;

Figure 11 is another flowchart of a method for segmenting a medical image according to an embodiment of the present disclosure;

Figure 12 is an exemplary diagram of overlapping patches in a method for segmenting a medical image according to an embodiment of the present disclosure;

Figure 13 is a schematic structural diagram of an apparatus for segmenting a medical image according to an embodiment of the present disclosure;

Figure 14 is another schematic structural diagram of an apparatus for segmenting a medical image according to an embodiment of the present disclosure; and

Figure 15 is a schematic structural diagram of an electronic device according to an embodiment of the present disclosure.

## DESCRIPTION OF EMBODIMENTS

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

Artificial Intelligence (AI) refers to a theory, a method, technology, or an application system, which simulates, extends, and expands human intelligence, perceives an environment, acquires knowledge, and utilizes knowledge, to obtain an optimal result via a digital computer or a machine controlled by a digital computer. In other words, the AI is a comprehensive technology of computer science, which attempts to understand essence of intelligence and produce a novel intelligent machine that can react in a manner similar to human intelligence. The AI aims at studying design principles and implementation methods of various intelligent machines, so as to render machines capable of perceiving, reasoning, and making decisions.

AI technology is a comprehensive discipline related to a wide range of fields, and includes techniques at levels of both hardware and software level. Basic AI technology generally includes techniques such as sensors, dedicated AI chips, cloud computing, distributed storage, big data processing, operation/interaction systems, and mechatronics. AI software technology mainly includes several major directions such as computer vision, speech processing, natural language processing, and machine learning (ML) or deep learning.

The computer vision (CV) is a discipline that studies how to enable a machine to "see". More specifically, the CV refers to replacing human eyes with a camera and a computer to implement machine vision such as recognition, tracking, and measurement on a target, and further implement graphic processing, so that the computer processes the target into an image more suitable for human eyes to observe, or an image transmitted to an instrument for detection. As a scientific discipline, the CV studies related theories and technologies, and attempts to establish an AI system capable to obtain information from images or multidimensional data. The CV technology generally includes techniques such as image segmentation, image processing, image recognition, image semantic understanding, image retrieval, optical character recognition (OCR), video processing, video semantic understanding, video content/behavior recognition, three-dimensional object reconstruction, 3D techniques, virtual reality, augmented reality, synchronous positioning, and map construction. The CV technology further includes common biological feature recognition technologies such as face recognition and fingerprint recognition.

The ML is multi-field interdiscipline, and relates to multiple disciplines such as the probability theory, statistics, the approximation theory, convex analysis, and the theory of algorithm complexity. The ML specializes in studying how a computer simulates or implements human learning behaviors to obtain new knowledge or new skills, and how a computer reorganizes a structure of existing knowledge to keep improving its performances. The ML is a core of AI, is a fundamental way to make a computer intelligent, and is applied to various fields of AI. Generally, the ML and deep learning include techniques such as artificial neural networks, belief networks, reinforcement learning, transfer learning, inductive learning, and learning from instructions.

A method for segmenting a medical image according to embodiments of the present disclosure relates to the CV technology, the ML technology, or the like of AI, and is described in detail by using following embodiments.

A method and an apparatus for segmenting a medical image, an electronic device, and a storage medium are provided according to embodiments of the present disclosure. The apparatus for segmenting a medical image may be integrated in an electronic device. The electronic device may be a device such as a server or a terminal.

Image segmentation refers to a technology and a process of partitioning an image into several particular regions having special properties, and extracting a target of interest therefrom. In embodiments of the present disclosure, the image segmentation mainly refers to segmenting a three-dimensional medical image and finding a target object on requirement. For example, a 3D medical image is divided into multiple single-frame slices (called slices for short) along a z-axis direction. Then a liver region or the like is obtained from the slices through segmentation. After segmentation results of all slices of the 3D medical image are obtained, these segmentation results are combined along the z-axis direction, so that a 3D segmentation result corresponding to the 3D medical image can be obtained. The 3D segmentation result is a 3D form of a target object, such as a liver region. The segmented target object may be subsequently analyzed by medical staffs or a medical expert for further operation.

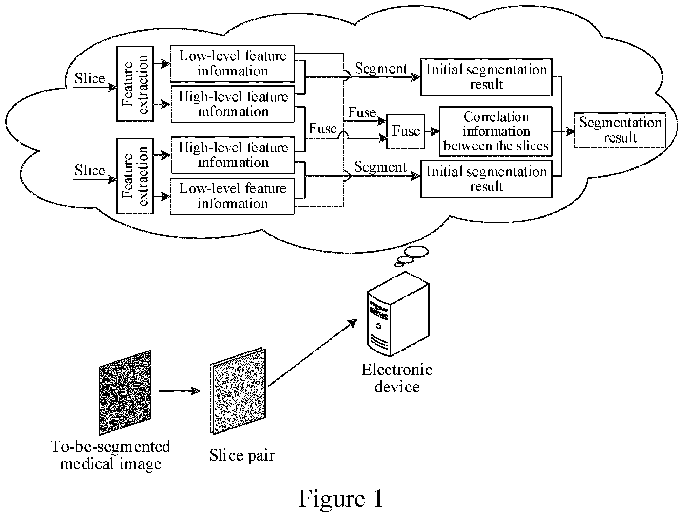

For example, reference is made to Figure 1. It is taken as an example that an apparatus for segmenting a medical image is integrated in an electronic device. The electronic device may obtain a slice pair (including two slices obtained by sampling a to-be-segmented medical image), and perform feature extraction on each slice in the slice pair based on different receptive fields, to obtain high-level feature information and low-level feature information of each slice. Then, in one aspect, the electronic device segments a target object in each slice in the slice pair according to the low-level feature information and the high-level feature information of said slice, to obtain an initial segmentation result for said slice. In another aspect, the electronic device fuses the low-level feature information and the high-level feature information of the slices in the slice pair, determines correlation information between the slices in the slice pair according to the fused feature information, and further generates a segmentation result for the slice pair based on the correlation information and the initial segmentation results for the slices in the slice pair.

Hereinafter detailed descriptions are provided. A sequence of describing following embodiments is not intended to define a preference among the embodiments.

Following embodiments are described from a perspective of an apparatus for segmenting a medical image. In a specific embodiment, the apparatus for segmenting the medical image may be integrated in an electronic device. The electronic device may be device such as a server or a terminal. The terminal may include a tablet computer, a notebook computer, a personal computer (PC), a medical image acquisition device, electronic medical equipment, or the like.

A method for segmenting a medical image includes following steps. A slice pair is obtained, where the slice pair includes two slices obtained by sampling a to-be-segmented medical image. Feature extraction is performed on each slice in the slice pair based on different receptive fields, to obtain high-level feature information and low-level feature information of each slice in the slice pair. A target object in each slice in the slice pair is segmented according to the low-level feature information and the high-level feature information of said slice, to obtain an initial segmentation result for said slice. The low-level feature information and the high-level feature information of the slices in the slice pair are fused, and correlation information between the slices in the slice pair is determined according to the fused feature information. A segmentation result for the slice pair is generated based on the correlation information and the initial segmentation results for the slices in the slice pair.

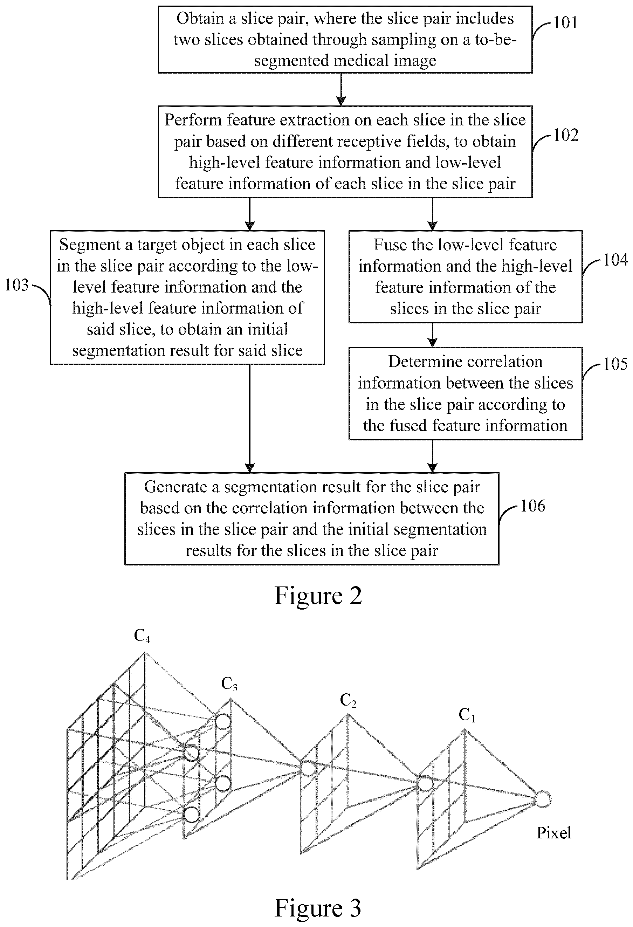

As shown in Figure 2, a specific process of the method for segmenting a medical image may include steps 101 to 106.

In step 101, a slice pair is obtained. The slice pair includes two slices obtained by sampling a to-be-segmented medical image.

For example, the to-be-segmented medical image may be obtained. Two slices are sampled from the to-be-segmented medical image. The slice pair refers to a set formed by the two slices.

The to-be-segmented medical image may be collected by a medical image acquisition device from various types from a biological tissue (for example, a heart or a liver), and then provided to the apparatus for segmenting the medical image. The medical image acquisition device may include an electronic device such as a magnetic resonance imaging (MRI) scanner, a CT scanner, a colposcope, or an endoscope.

In step 102, feature extraction is performed on each slice in the slice pair based on different receptive fields, to obtain high-level feature information and low-level feature information of each slice in the slice pair.

In a convolutional neural network, the receptive field determines a size of a region in an input layer, and such region corresponds to an element in an output result in a layer. That is, the receptive field is an area of mapping an element in the output result (that is, a feature map, also known as feature information) in the layer in the convolutional neural network to an input image. For example, reference is made to Figure 3. Generally, a size of a receptive field of a pixel in an feature map outputted by a first convolutional layer (for example, $C_1$) is equal to a size of a convolution kernel (filter size), and a size of a receptive field of a high-level convolutional layer (for example, $C_4$) is related to sizes of convolution kernels and step sizes of all layers prior to such high-level convolutional layer. Therefore, different levels of information may be captured based on different receptive fields, so as to extract feature information of different scales. That is, after the feature extraction is performed on a slice based on different receptive fields, high-layer feature information and low-layer feature information of the slice may be obtained in different scales.

There may be various manners for performing the feature extraction on the slice based on different receptive fields. For example, the feature extraction may be implemented through a residual network. That is, the step 102 may include a following step.

The feature extraction is performed on each slice in the slice pair through a residual network in a trained segmentation model, to obtain the high-level feature information and the low-level feature information of each slice in the slice pair.

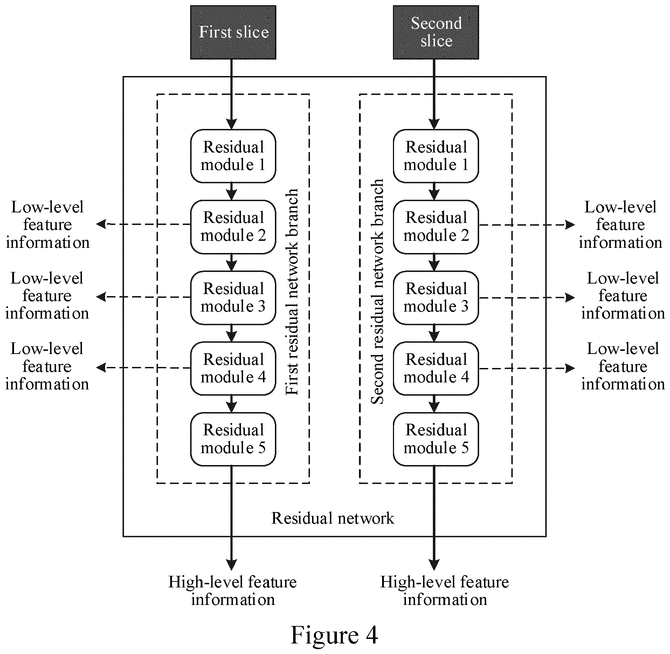

For example, as shown in Figure 4, it is taken as an example that the slice pair includes a first slice and a second slice, and the residual network includes a first residual network branch and a second residual network branch that are in parallel and of a same structure. In such case, the feature extraction may be performed on the first slice through the first residual network branch in the residual network, to obtain the high-level feature information and the low-level feature information of different scales corresponding to the first slice. Further, the feature extraction may be performed on the second slice through the second residual network branch in the residual network, to obtain the high-level feature information and the low-level feature information of different scales corresponding to the second slice.

The high-level feature information refers to a feature map finally outputted by the residual network. The "high-level feature" may generally include information related to a category, high-level abstraction, or the like. The low-level feature information refers to a feature map obtained in a process of the residual network performing the feature extraction on the to-be-segmented medical image. The "low-level feature" may generally include image details such as an edge and a texture.

For example, one of the residual network branches (such as the first residual network branch or the second residual network branch) includes multiple residual modules connected in series. In such case, the high-level feature information refers to a feature map outputted by the last residual module. The low-level feature information refers to a feature map outputted by a residual module other than the first residual module and the last residual module.

For example, reference is made to Figure 4. Each residual network branch may include a residual module 1 (block 1), a residual module 2 (block 2), a residual module 3 (block 3), a residual module 4 (block 4), and a residual module 5 (block 5). In such case, a feature map outputted by the residual module 5 is the high-level feature information, and feature maps outputted by the residual module 2, the residual module 3, and the residual module 4 are the low-level feature information.

Network structures of the first residual network branch and the second residual network branch may be specifically determined according to a practical requirement. For example, ResNet-18 (a kind of a residual network) may be applied. In addition, the first residual network branch and the second residual network branch may share parameters. A specific configuration of the parameters may be determined according to a practical requirement.

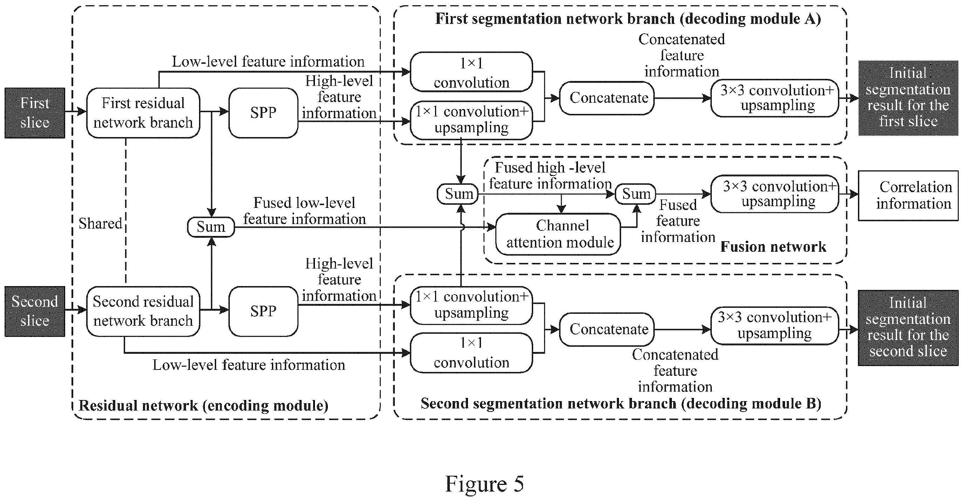

In an optional embodiment, spatial pyramid pooling (SPP) may be further performed on the obtained high-level feature information, to obtain more scales of the high-level feature information. For example, reference is made to Figure 5. An SPP module such as an atrous spatial pyramid pooling (ASPP) module may be added subsequent to each of the first residual network branch and the second residual network branch. Since the ASPP adopts atrous convolution, a receptive field of a feature can be expanded without sacrificing spatial resolution of the feature. Therefore, the high-level feature information in more scales can be naturally extracted.

The ASPP module connected to the first residual network branch and the ASPP module connected to the second residual network branch may not share parameters. Specific parameters of the ASPP may be determined according to a practical requirement. Details are not described herein.

As shown in Figure 5, in embodiments of the present disclosure, the residual network may be considered as an encoding part of the trained segmentation model.

In step 103, a target object in each slice in the slice pair is segmented according to the low-level feature information and the high-level feature information of said slice, to obtain an initial segmentation result for said slice.

For example, for each slice in the slice pair, the target object in the slice may be segmented by a segmentation network in the trained segmentation model according to the low-level feature information and the high-level feature information of said slice, so as to obtain the initial segmentation result for slice. Details are as follows.

For each slice in the slice pair, convolution (Conv) is separately performed on the low-level feature information and the high-level feature information of the slice through the segmentation network in the trained segmentation model. The high-level feature information subject to the convolution is up-sampled to a same size as the low-level feature information subject to the convolution, and then is concatenated (Concat) with the low-level feature information subject to the convolution, to obtain concatenated feature information. Pixels belonging to the target object in such slice are selected according to the concatenated feature information, to obtain the initial segmentation result for the slice.

The segmentation network may be regarded as a decoding part of the trained segmentation model.

For example, it is further taken as an example that the slice pair includes the first slice and the second slice. The segmentation network may include a first segmentation network branch (a decoding module A) and a second segmentation network branch (a decoding module B) that are in parallel and of a same structure. In such case, reference is made to Figure 5, where the details are as follows.

(1) The low-level feature information of the first slice and the high-level feature information of the first slice are subject to convolution, for example, with a convolution kernel of a $1 \times 1$ dimension, through the first segmentation network branch. The high-level feature information subject to the convolution is up-sampled to a same size as the low-level feature information subject to the convolution, and then is concatenated with the low-level feature information subject to the convolution, to obtain the concatenated feature information of the first slice. Afterwards, pixels belonging to the target object in the first slice are selected according to the concatenated feature information, to obtain the initial segmentation result for the first slice. The concatenated feature information is subject to convolution, for example with a convolution kernel of a $3 \times 3$ dimension, and then up-sampled to a same size as the first slice. Thereby, the initial segmentation result for the first slice can be obtained.

(2) The low-level feature information of the second slice and the high-level feature information of the second slice are subject to convolution, for example, with a convolution kernel of a $1 \times 1$ dimension, through the second segmentation network branch. The high-level feature information subject to the convolution is up-sampled to a same size as the low-level feature information subject to the convolution, and then is concatenated with the low-level feature information subject to the convolution, to obtain the concatenated feature information of the second slice. Afterwards, pixels belonging to the target object in the second slice are selected according to the concatenated feature information, to obtain the initial segmentation result for the second slice. The concatenated feature information is subject to convolution, for example with a convolution kernel of a $3 \times 3$ dimension, and then up-sampled to a same size as the second slice. Thereby, the initial segmentation result for the second slice can be obtained.

In step 104, the low-level feature information and the high-level feature information of the slices in the slice pair are fused.

For example, the low-level feature information and the high-level feature information of the slices in the slice pair may be fused through a fusion network in the trained segmentation model.

There may be various manners for fusing the low-level feature information and the high-level feature information. For example, the low-level feature information and the high-level feature information may be fused through "element-wise sum" (Sum) or channel superimposition. The "element-wise sum" is taken as an example, the step of "fusing the low-level feature information and the high-level feature information of the slices in the slice pair through the fusion network in the trained segmentation model" may include following steps (1) to (3).

In step (1), The low-level feature information of the slices in the slice pair are element-wise summed, to obtain fused low-level feature information.

As shown in Figure 5, it is taken as an example that the slice pair includes a first slice and a second slice. In such case, the low-level feature information of the first slice and the low-level feature information of the second slice are element-wise summed, to obtain the fused low-level feature information.

In step (2), The high-level feature information of the slices in the slice pair are element-wise summed, to obtain fused high-level feature information.

As shown in Figure 5, it is taken as an example that the slice pair includes a first slice and a second slice. In such case, the high-level feature information of the first slice and the high-level feature information of the second slice are element-wise summed, to obtain the fused high-level feature information.

In step (3), The fused low-level feature information and the fused high-level feature information are fused through the fusion network in the trained segmentation model, to obtain the fused feature information. In a specific example, such fusion may be performed in any of following manners.

A. First Manner

The fused low-level feature information and the fused high-level feature information are element-wise summed through the fusion network in the trained segmentation model, to obtain the fused feature information.

In an optional embodiment, influences of different features on a specific task have different weights. Hence, in order to assign appropriate significance to different features effectively, make better use of the features, and finally improve accuracy of image segmentation, an attention mechanism may be further applied to enable a network to assign different weights to different feature information automatically, so that the network can fuse the feature information selectively.

Namely, besides the first manner, the fused low-level feature information and the fused high-level feature information may be fused in a second manner as follows.

B. Second Manner:

A weight is assigned to the fused low-level feature information according to the fused low-level feature information and the fused high-level feature information, through a channel attention module in the fusion network in the trained segmentation model, to obtain weighted feature information. The weighted feature information and the fused low-level feature information are element-wise multiplied, to obtain processed feature information. The processed feature information and the fused high-level feature information are element-wise summed, to obtain the fused feature information. Reference is made to Figure 5.

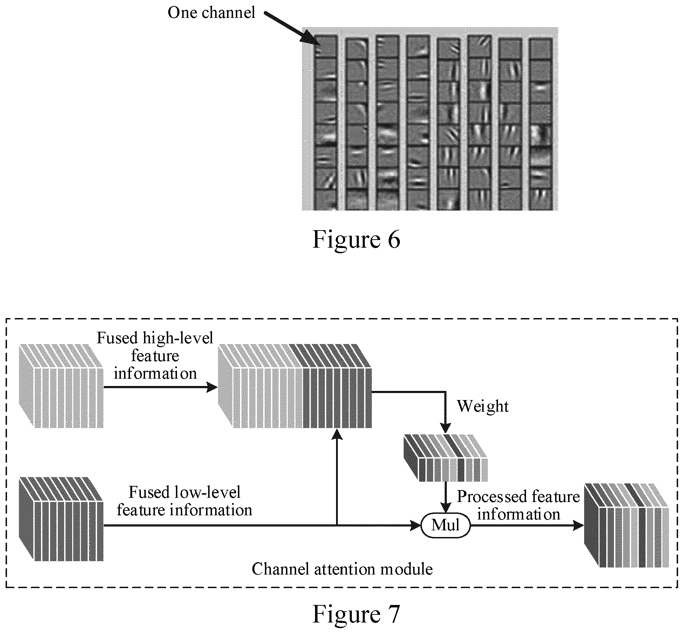

The channel attention module refers to a network module using an attention mechanism in a channel domain. In a convolution neural network, each image is initially represented by three channels (R, G, and B channels). After processed by different convolution kernels, each channel would generate a new signal. For example, each channel of an image feature would generate a matrix with 64 new channels (H, W, 64) after being subject to convolution with 64 kernels, where H and W represent a height and a width, respectively, of the image feature. Features in these new channels actually represent components of the image on different convolution kernels, which is similar to a time-to-frequency transform, and the convolution with a convolution kernel is similar to a Fourier transform on the signal. Thereby, information of the feature in one channel can be decomposed into signal components on 64 convolution kernel. For example, reference is made to Figure 6. Each signal can be divided into signal components on 64 convolution kernels (equivalent to generating 64 new channels). The 64 new channels have distinct rather than identical contributions to critical information. Therefore, a weight may be assigned to each channel to represent a correlation between said channel and the critical information (referring to information critical to the segmentation task), such that a channel with larger weight is has higher correlation. A channel with higher correlation is one requiring more attention. Accordingly, such mechanism is called an "attention mechanism in a channel domain".

A specific structure of the channel attention module may be determined according to a practical requirement. In a specific example as shown in Figure 7, a weight may be assigned to the fused low-level feature information according to the fused low-level feature information and the fused high-level feature information, through the channel attention module in the fusion network in the trained segmentation model, to obtain weighted feature information. Then, the weighted feature information and the fused low-level feature information are element-wise multiplied (Mul), to obtain processed feature information. The processed feature information and the fused high-level feature information are element-wise summed, to obtain the fused feature information.

The steps 103 and 104 may be performed in arbitrary orders. Details are not described herein.

In step 105, correlation information between the slices in the slice pair is determined according to the fused feature information.

For example, the correlation information may be determined between the slices in the slice pair according to the fused feature information, through the fusion network in the trained segmentation model. In a specific example, a feature belonging to the target object may be selected from the fused feature information, and the correlation information between the slices in the slice pair is determined according to the selected feature (that is, a feature belonging to the target object).

The target object is an object that needs to be recognized from a slice, for example, a "liver" for segmentation of a liver image, a "heart" for the segmentation of a heart image, or the like.

There may be various manners of determining the correlation information between the slices according to the fused feature information. Example of the manners may include following steps (1) to (3).

In step (1), a background region and a foreground region of each slice in the slice pair is determined according to the selected feature.

In a specific embodiment, the target object is a liver. In such case, it may be determined that a region in which the selected feature belonging to the liver is located is the foreground region of the slice, and the remaining region in the slice is the background region of the slice.

In another specific embodiment, the target object is a heart. In such case, it may be determined that a region in which the selected feature belonging to the heart is located is the foreground region of the slice, and the remaining region in the slice is the background region of the slice.

In step (2), difference pixel(s) and intersection pixel(s) between the foreground regions of the slices in the slice pair are calculated.

In a specific example, in the fused feature information, pixel(s) belonging to the foreground region of only one slice or only the other slice in the slice pair may be combined to obtain a pixel set for a difference region, and such pixels are called difference pixel(s) for short. In the fused feature information, pixel(s) belonging to both foreground regions of the two slices in the slice pair are combined to obtain a pixel set for an intersection region, such pixel(s) are called intersection pixels for short.

The fused feature information may be regarded as feature information corresponding to a superimposed slice obtained by "superimposing both slices in the slice pair". Therefore, in the superimposed slice, pixels in a region in which the foreground regions (of two slices) do not overlap are obtained, so that the difference pixels can be obtained. Similarly, pixels in a region in which the foreground regions overlap are obtained, so that the intersection pixels can be obtained.

In step (3), the correlation information between the slices is generated according to the background regions of the slices, the difference pixels, and the intersection pixels.

For example, in the fused feature information (for the superimposed slice), pixels belonging to both background regions of the slices in the slice pair may serve as the background region of the slice pair. In other words, an intersection between the background regions of both slices serves the background region of the slice pair. Then, pixel types are labeled for the background region of the slice pair, the difference pixels, and the intersection pixels, to obtain the correlation information between the slices.

For example, different pixel values may be used to label the pixel types for these regions. As an example, pixel values in the background region of the slice pair may be set as "0", pixel values of the difference pixels may be set as "1", and pixel values of the intersection pixels may be set as "2". Alternatively, pixel values in the background region may be set as "0", pixel values of the difference pixels may be set as "2", and pixel values of the intersection pixels may be set as "1".

In an optional embodiment, different colors may be used to p label the pixel types for these regions. As an example, pixel values in the background region of the slice pair may be set to be black, pixel values of the difference pixels may be set to be red, and pixel values of the intersection pixels may be set to be green. Alternatively, pixel values in the background region may be set to be black, pixel values of the difference pixels may be set to be green, and pixel values of the intersection pixels may be set to be red.

In step 106, a segmentation result for the slice pair is generated based on the correlation information between the slices in the slice pair and the initial segmentation results for the slices in the slice pair.

For example, the slice pair includes a first slice and a second slice. In such case, the step 106 may include following steps (1) to (5).

In step (1), a segmentation result for the second slice is predicted according to the correlation information between the slices in the slice pair and the initial segmentation result for the first slice, to obtain a predicted segmentation result for the second slice.

Here the correlation information between the slices refers to correlation information between the first slice and the second slice, and may reflect the difference pixels, the intersection pixels, or the like between the first slice and the second slice. Therefore, the segmentation result for the second slice may be predicted according to the correlation information and the initial segmentation result for the first slice.

For example, the difference pixels between the first slice and the second slice are equivalent to a region A, the intersection pixels between the first slice and the second slice are equivalent to a region B, and the initial segmentation result for the first slice leads to a region C. In such case, the predicted segmentation result for the second slice is "$\{(A \cup B)\backslash C\} \cup B$". "U" represents a union operator, and "\" represents a difference operator.

In step (2), a segmentation result is predicted for the first slice according to the correlation information between the slices in the slice pair and the initial segmentation result for the second slice, to obtain a predicted segmentation result for the first slice.

Similar to the predicted segmentation result for the second slice, it is assumed that the difference pixels between the first slice and the second slice are equivalent to the region A, the intersection pixels between the first slice and the second slice are equivalent to the region B, and the initial segmentation result for the second slice leads to a region D.

In such case, the predicted segmentation result for the first slice is "{($A \cup B$)\$D$} $\cup$ $B$".

In step (3), the initial segmentation result for the first slice is adjusted based on the predicted segmentation result for the first slice, to obtain an adjusted segmentation result for the first slice. In a specific embodiment, the step (3) may include a following step.

The predicted segmentation result for the first slice and the initial segmentation result for the first slice are averaged to obtain the adjusted segmentation result for the first slice.

That is, pixel values in the predicted segmentation result for the first slice and those at same positions in the initial segmentation result for the first slice are averaged, and averaged pixel values serve as pixel values at such positions in the adjusted segmentation result for the first slice.

In step (4), the initial segmentation result for the second slice is adjusted based on the predicted segmentation result for the second slice, to obtain an adjusted segmentation result for the second slice. In a specific embodiment, the step (4) may include a following step.

The predicted segmentation result for the second slice and the initial segmentation result for the second slice are averaged to obtain the adjusted segmentation result for the second slice.

That is, pixel values in the predicted segmentation result for the second slice and those at same positions in the initial segmentation result for the second slice are averaged, and averaged pixel values serve as pixel values at such positions in the adjusted segmentation result for the second slice.

In step (5), the adjusted segmentation result for the first slice and the adjusted segmentation result for the second slice are fused, to obtain the segmentation result for the slice pair. In a specific embodiment, the step (5) may include a following step.

The adjusted segmentation result for the first slice and the adjusted segmentation result for the second slice are averaged and then binarized, to obtain the segmentation result for the slice pair.

That is, pixel values in the adjusted segmentation result for the first slice and the pixel values at same positions in the adjusted segmentation result for the second slice are averaged, and the averaged pixel values serve as pixel values at such positions in the segmentation result for the slice pair.

The binarization refers to setting a grayscale of a pixel in the image to be either 0 or 255, such that the entire image presents a clear visual effect only including black and white.

As can be learned from the foregoing description of embodiments, the trained segmentation model in the embodiments of the present disclosure may include a residual network, a segmentation network, a fusion network, and the like. The residual network may include a first residual network branch and a second residual network branch that are in parallel. The segmentation network may include a first segmentation network branch and a second segmentation network branch that are in parallel. The residual network part may be considered as an encoder part of a trained image segmentation model, which is called an encoding module and is configured to extract feature information. The segmentation network may be considered as a decoder part of the trained segmentation model, which is called as a decoding module and configured to perform classification and segmentation according to the extracted feature information.

In an optional embodiment, the trained segmentation model may be trained by using multiple sample slice pairs annotated with actual values. In a specific embodiment, the trained segmentation model may be preset by operation personnel or may be trained via the apparatus for segmenting the medical image. That is, before the step of "performing the feature extraction on each slice in the slice pair through the residual network in a trained segmentation model, to obtain the high-level feature information and the low-level feature information of each slice", the method for segmenting the medical image may further include following steps S 1 to S5.

In step S1, multiple sample slice pairs annotated with actual values are acquired. The sample slice pair includes two sample slices obtained by sampling a sample medical image.

In a specific example, multiple medical images may be collected and serve as an original data set. For example, the original data set may be obtained from a database, a network, or the like. Then, the medical images in the original data set are preprocessed, to obtain images that meet an input standard of a preset segmentation model, that is, to obtain sample medical images. The obtained sample medical image is sliced to obtain slices (which are called sample slices herein). A target object is annotated in each sample slice, which is also called annotation of actual values. Every two sample slices constitute one set, so that multiple sample slice pairs annotated with actual values can be obtained.

The preprocessing may include operations such as deduplicating, cropping, rotating, flipping, and/or the like. For example, a size for inputs of the preset segmentation network is 128* 128*32 (width* height* depth). In such case, the images in the original data set may be cropped to a size of 128* 128*32. It is appreciated that other preprocessing operations may be further performed on these images.

In step S2, the feature extraction is performed on each sample slice in the sample slice pair through the residual network in the preset segmentation model, to obtain high-level feature information and low-level feature information of each sample slice.

For example, the sample slice pair includes a first sample slice and a second sample slice, and the residual network includes a first residual network branch and a second residual network branch that are in parallel. In such case, the feature extraction may be performed on the first sample slice through the first residual network branch in the residual network, to obtain the high-level feature information and the low-level feature information of different scales corresponding to the first sample slice. Further, the feature extraction may be performed on the second sample slice through the second residual network branch in the residual network, to obtain the high-level feature information and the low-level feature information of different scales corresponding to the second sample slice.

In step S3, a target object in each sample slice in the sample slice pair is segmented through the segmentation network in the preset segmentation model, according to the low-level feature information and the high-level feature information of said sample slice, to obtain a predicted segmentation value (that is, an image of predicted probabilities) for said sample slice.

For example, the sample slice pair includes a first sample slice and a second sample slice. The segmentation network may include a first segmentation network branch and a second segmentation network branch that are in parallel. In such case, following operations may be performed.

A: The low-level feature information of the first sample slice and the high-level feature information of the first sample slice are subject to convolution, for example, with a convolution kernel of a $1 \times 1$ dimension, through the first segmentation network branch. The high-level feature information subject to the convolution is up-sampled to a same size as the low-level feature information subject to the convolution, and then is concatenated with the low-level feature information subject to the convolution, to obtain concatenated feature information of the first sample slice. Afterwards, pixels belonging to the target object in the first sample slice are selected according to the concatenated feature information, to obtain the predicated segmentation value for the first sample slice. In a specific example, the concatenated feature information may be subject to convolution with a convolution kernel of a $3 \times 3$ dimension, and then up-sampled to a same size as the first sample slice. Thereby, the predicated segmentation value for the first sample slice can be obtained.

B: The low-level feature information of the second sample slice and the high-level feature information of the second sample slice are subject to convolution, for example, with a convolution kernel of a $1 \times 1$ dimension, through the second segmentation network branch. The high-level feature information subject to the convolution is up-sampled to a same size as the low-level feature information subject to the convolution, and then is concatenated with the low-level feature information subject to the convolution, to obtain concatenated feature information of the second sample slice. Afterwards, pixels belonging to the target object in the second sample slice are selected according to the concatenated feature information, to obtain the predicated segmentation value for the second sample slice. In a specific example, the concatenated feature information may be subject to convolution with a convolution kernel of a $3 \times 3$ dimension, and then up-sampled to a same size as the second sample slice. Thereby, the predicated segmentation value for the second sample slice can be obtained.

In step S4, the low-level feature information and the high-level feature information of the sample slices in the sample slice pair are fused through fusion network in the preset segmentation model, and correlation information between the sample slices in the sample slice pair is predicted according to the fused feature information.

For example, the low-level feature information of the sample slices in the sample slice pair may be element-wise summed to obtain fused low-level feature information. The high-level feature information of the sample slices in the sample slice pair may be element-wise summed to obtain fused high-level feature information. Then, the fused low-level feature information and the fused high-level feature information are fused through the fusion network in the preset segmentation model, to obtain the fused feature information. Thereby, a feature belonging to the target object may be selected from the fused feature information, and the correlation information between the sample slices in the sample slice pair is determined according to the selected feature.

Manners for fusing the fused low-level feature information and the fused high-level feature information may refer to the foregoing embodiments for details. In addition, manners of calculating the correlation information between the sample slices in the sample slice pair is same as those of calculating the correlation information between the slices in the slice pair. Details may refer to the foregoing embodiments, and are not described again herein.

In step S5, the preset segmentation model is converged based on the actual values, the predicted segmentation values of the sample slices in the sample slice pair, and the predicted correlation information, to obtain the trained segmentation model.

In a specific example, the preset segmentation model may be converged based on the actual values, the predicted segmentation values, and the predicted correlation information through a loss function, such as a Dice Loss function, to obtain the trained segmentation model.

In a specific embodiment, the loss function may be set according to a practical requirement. For example, the sample slice pair includes a first sample slice $x^i$ and a second sample slice $x^j$. An actual value annotated for the first sample slice $x^i$ is $y^i$, and an actual value annotated for the second sample slice $x^j$ is $y^j$. The Dice loss function of the first segmentation network branch may be as follows.

$$\mathcal{L}_1(y^i, p^i) = \frac{2\sum_{s,t} y^i_{st} p^i_{st}}{\sum_{s,t} y^i_{st} + p^i_{st}}$$

The Dice loss function of the second segmentation network branch may be as follows:

$$\mathcal{L}_2(y^j, p^j) = \frac{2\sum_{s,t} y^j_{st} p^j_{st}}{\sum_{s,t} y^j_{st} + p^j_{st}}$$

$p^i$ and $p^j$ are the predicted segmentation values of the first segmentation network branch and the second segmentation network branch, respectively, s and t are spatial indexes of a row and a column, respectively, in a slice. $y^i_{st}$ represents an actual value annotated for the pixel with a spatial index (s, t) in the first sample slice, and $p^i_{st}$ represents a predicted segmentation value of the pixel with the spatial index (s, t) in the first sample slice. $y^j_{st}$ represents an actual value annotated for a pixel with a spatial index (s, t) in the second sample slice, and $p^j_{st}$ represents a predicted segmentation value of the pixel with the spatial index (s, t) in the second sample slice.

For example, the correlation information between slices outputted by the fusion network includes three types of relations: a background region, an intersection pixel, and a difference pixel. The Dice Loss function of the fusion network may be calculated according to the foregoing two Dice Loss functions:

$$\mathcal{L}_{\text{proxy}}(y^{ij}, p^{ij}) = \frac{1}{3} \sum_{\ell \in \{0,1,2\}} \frac{2\sum_{s,t} y^{ij\ell}_{st} p^{ij\ell}_{st}}{\sum_{s,t} (y^{ij\ell}_{st} + p^{ij\ell}_{st})}$$

$y^{ij}$ is the actual value of a correlation between the first sample slice $x^i$ and the second sample slice $x^j$. The actual value of the correlation may be calculated according to an actual value annotated for the first sample slice $x^i$ and an actual value annotated for the second sample slice $x^j$. For example, a background region of an image obtained by superimposing the first sample slice $x^i$ and the second sample slice $x^j$, and a difference set and an intersection between the actual value annotated for the first sample slice $x^i$ and the actual value annotated for the second sample slice $x^j$, may be determined. The background region, the difference set, and intersection obtained herein are actual values for the background region, the difference pixel, and the intersection pixel obtained after superimposing the first sample slice $x^i$ and the second sample slice $x^j$, that is, the actual values for the correlation information discussed in embodiments of the present disclosure.

$p^{ij}$ represents the correlation between the first sample slice $x^i$ and the second sample slice $x^j$ outputted by the fusion network, s and t are spatial indexes of a row and a column in a slice. $y^{ij\ell}_{st}$ represents the actual value of the correlation between the superimposed pixels with a spatial index (s, t) in the superimposed sample slices. $p^{ij\ell}_{st}$ represents a predicted value of the correlation (that is, the correlation outputted by the fusion network) between the superimposed pixels with the spatial position index (s, t) in the superimposed sample slices. $\ell$ is a category index for the foregoing three types of relations (that is, the background region, the intersection pixel, and the difference pixel).

An overall loss function $\mathcal{L}(y^i, p^i, y^j, p^j, y^{ij}, p^{ij}; \Theta)$ of the image segmentation model may be calculated as follows based on the Dice Loss function of the first segmentation network branch, the Dice Loss function of the second segmentation network branch, and the Dice Loss function of the fusion network:

$$\mathcal{L}(y^i, p^i, y^j, p^j, y^{ij}, p^{ij}; \Theta) = \lambda_1 \mathcal{L}_1(y^i, p^i) + \lambda_2 \mathcal{L}_2(y^i, p^i) + \lambda_3 \mathcal{L}_{\text{proxy}}(y^{ij}, p^{ij})$$

$\lambda_1$, $\lambda_2$, and $\lambda_3$ are hyper parameters that are manually configured to balance the contributions of different loss parts to the overall loss.

As can be learned from above, in these embodiments, after the slice pair is obtained, the feature extraction may be performed on each slice in the slice pair based on the different receptive fields, to obtain the high-level feature information and the low-level feature information of each slice. Then, in one aspect, the target object in each slice in the slice pair is segmented according to the low-level feature information and the high-level feature information of said slice, to obtain an initial segmentation result for said slice. In another aspect, the low-level feature information and the high-level feature information of the slices in the slice pair are fused, and the correlation information between the slices in the slice pair is determined according to the fused feature information. Afterwards, the segmentation result for the slice pair is generated based on the correlation information between the slices in the slice pair and the initial segmentation results for the slices in the slice pair. Correlation among slices of a 3D medical image is considered in embodiments of the present disclosure. Accordingly, two slices (the slice pair) are segmented at the same time, and the segmentation results are further adjusted based on a correlation relationship between the slices. It is ensured that shape information of a target object (such as a liver) can be captured more accurately, improving segmentation accuracy.

Hereinafter examples are illustrated for further detailed description, according to the foregoing method embodiments.

In an embodiment, it is taken as an example that the apparatus for segmenting the medical image is integrated in an electronic device, and the target object thereof is a liver.

(I) Training of an image segmentation model

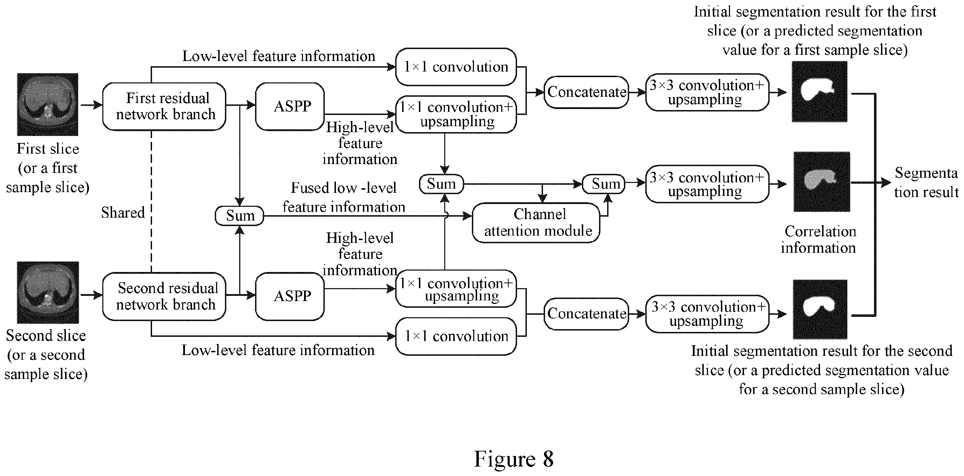

As shown in Figure 5 and Figure 8, the image segmentation model may include a residual network, a segmentation network, and a fusion network. The residual network may include two residual network branches that are in parallel and of a same structure, namely, a first residual network branch and a second residual network branch. In an optional embodiment, an ASPP (atrous spatial pyramid pooling) module may be further connected subsequent to each residual network branch. The residual network serves as an encoding module of the image segmentation model, and may be configured to perform feature information extraction on an input image. The input image is, for example, the slices in the slice pair or the sample slices in the sample slice pair.

Similarly, the segmentation network may include two segmentation network branches that are in parallel and of a same structure, namely, a first segmentation network branch and a second segmentation network branch. The segmentation network serves as a decoding module of the image segmentation model, and is configured perform segmentation on the target object according to the feature information extracted by the encoding module. The target object is, for example, a liver.

The fusion network is configured to predict the correlation between the slices in the slice pair (or between the sample slices in the sample slice pair) according to the feature information extracted by the encoding module. Hereinafter a manner of training the image segmentation model is described in detail based on the structure of the image segmentation model.

First, the electronic device may acquire multiple 3D medical images including a liver structure. For example, the multiple 3D medical images including the liver structure are obtained from a database, a network, or the like. These 3D medical images are preprocessed through an operation, such as deduplicating, cropping, rotating, flipping, and/or the like, to obtain an image that meets an input standard of a preset segmentation model. The images serve as sample medical images. Then, the images is sampled along a z-axis (where the 3D coordinate axes are {x, y, z}) of the sample medical image, based on a certain time interval, to obtain multiple sample slices. Afterwards, information such as a liver region is annotated in each sample slice, and every two sample slices constitute one set. Thereby, multiple sample slice pairs annotated with actual values can be obtained.

The sample slices may constitute the sample slice pairs in various manners. For example, a sample slice 1 and a sample slice 2 constitutes a sample slice pair 1, and the sample slice 1 and a sample slice 3 constitutes a sample slice pair 2, and so forth. Hence, the different combination manners is capable to augment sample slices of a limited quantity to obtain more training data (i.e. data augmentation). Thereby, the image segmentation model can be trained even with a small amount of manually annotated data.

Then, after the multiple sample slice pairs annotated with actual values are obtained, the electronic device may input the sample slice pairs into the preset image segmentation model, and perform the feature extraction on the sample slice pairs through the residual network. In a specific example, the feature extraction may be performed on a first sample slice in the sample slice pair through a first residual network branch, to obtain the high-level feature information and the low-level feature information of different scales corresponding to the first sample slice. Further, the feature extraction may be performed on the second sample slice in the sample slice pair through a second residual network branch, to obtain the high-level feature information and the low-level feature information of different scales corresponding to the second sample slice.

In an optional embodiment, the high-level feature information corresponding to the first sample slice and the high-level feature information corresponding to the second sample slice may be further processed through the ASPP, to obtain the high-level feature information of more scales. Reference is made to Figure 8.

Moreover, following operations are performed after the high-level feature information and the low-level feature information corresponding to the first sample slice and the high-level feature information and the low-level feature information corresponding to the second sample slice are obtained. In one aspect, the electronic device may perform segmentation for the liver on the first sample slice and the second sample slice, through the first segmentation network branch and the second segmentation network branch, respectively, according to the high-level feature information and the low-level feature information. Thereby, the predicted segmentation value of the first sample slice and the predicted segmentation value of the second sample slice are obtained. In another aspect, the electronic device may fuse the low-level feature information and the high-level feature information of the first sample slice and the second sample slice through the fusion network, and predict the correlation information between the first sample slice and the second sample slice according to the fused feature information. For example, details may be as follows.

Reference is made to Figure 8. The low-level feature information of the first sample slice and the low-level feature information of the second sample slice may be element-wise summed to obtain the fused low-level feature information. The high-level feature information of the first sample slice and the high-level feature information of the second sample slice may be element-wise summed to obtain the fused high-level feature information. Then, a weight is assigned to the fused low-level feature information according to the fused low-level feature information and the fused high-level feature information, through the channel attention module, to obtain the weighted feature information. The weighted feature information and the fused low-level feature information are element-wise multiplied (Mul) to obtain the processed feature information. The processed feature information and the fused high-level feature information are element-wise summed, so as to obtain the fused feature information. Subsequently, a feature belonging to liver may be selected from the fused feature information, and the correlation information between the first sample slice and the second sample slice is predicted according to the selected feature belonging to liver. For example, the background regions of the first sample slice and the second sample slice, and the intersection pixels, the difference pixels, and the like between the first sample slice and the second sample slice, may be predicted.

Finally, the preset image segmentation model may be converged based on the actual values annotated for the sample slice pair, the predicted segmentation values of the sample slices in the sample slice pair, and the predicted correlation information, to obtain the trained image segmentation model.

The actual value annotated for the sample slice pair includes a liver region annotated in the first sample slice and a liver region annotated in the second sample slice. The actual correlation between the first sample slice and the second sample slice may be further determined based on the liver region annotated in the first sample slice and the liver region annotated in the second sample slice. The actual correlation includes the background region of the sample slice pair constituted by the first sample slice and the second sample slice, actual difference pixels between the first sample slice and the second sample slice, actual intersection pixels between the first sample slice and the second sample slice, and the like.

The actual background region of the sample slice pair constituted by the first sample slice and the second sample slice may be obtained as an intersection between the background region of the first sample slice and the background region of the second sample slice, after the first sample slice and the second sample slice are superimposed. The actual difference pixels between the first sample slice and the second sample slice may be obtained by calculating a difference set between the liver region annotated in the first sample slice and the liver region annotated in the second sample slice. The actual intersection pixels between the first sample slice and the second sample slice may be obtained by calculating an intersection between the liver region annotated in the first sample slice and the liver region annotated in the second sample slice.

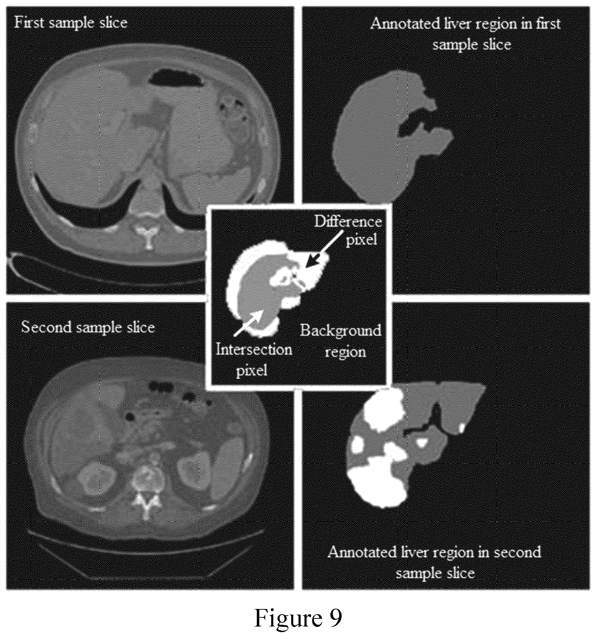

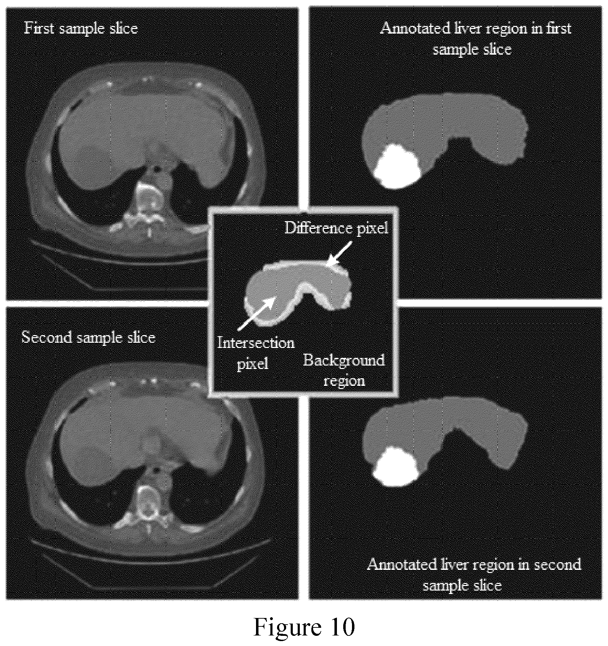

In an optional embodiment, different types of regions may be labeled with different colors or different pixel values in the superimposed images with the liver region annotated in the first sample slice and the liver region annotated in the second sample slice. Thereby, the actual correlation between the first sample slice and the second sample slice is rapidly and conveniently identified. For example, reference is made to Figure 9 and Figure 10. The background region of the sample slice pair may be colored black, the intersection pixels may be colored red (shown as white in Figure 9 and Figure 10), and the intersection pixel may be colored with green (shown as gray in Figure 9 and Figure 10). Alternatively, pixel values in the background region of the sample slice pair may be set as 0, pixel values of the intersection pixels may be set as 1, andpixel values of the intersection pixels may be set as 2.

The images at centers of Figure 9 and Figure 10 are the superimposed images with the liver region annotated in the first sample slice and the liver region annotated in the second sample slice. In addition, the first sample slice and the second sample slice in Figure 9 are sampled from different CT images, and the first sample slice and the second sample slice in Figure 10 are sampled from a same CT image.

A specific convergence may be implemented by using a Dice Loss function. In a specific embodiment, the Dice

loss function $\mathcal{L}(y^i,p^i,y^j,p^j,y^{ij},p^{ij};\Theta)$ may be as follows:

$$\mathcal{L}(y^i,p^i,y^j,p^j,y^{ij},p^{ij};\Theta) = \lambda_1\mathcal{L}_1(y^i,p^i) + \lambda_2\mathcal{L}_2(y^i,p^i) + \lambda_3\mathcal{L}_{\text{proxy}}(y^{ij},p^{ij})$$

$\lambda_1$, $\lambda_2$, and $\lambda_3$ are hyper parameters that are manually set to balance the contributions of different loss parts of the overall loss. Details of $\mathcal{L}_1(y^i,p^i)$, $\mathcal{L}_2(y^i,p^i)$, and $(y^{ij},p^{ij})$ may refer to the foregoing embodiments, and are not described again herein.

After the preset image segmentation model has been converged based on the Dice Loss function, training is completed once. The rest training can be deduced by analogy. The trained image segmentation model can be obtained after multiple times of training.

During the training, besides that the actual annotation of the liver in the sample slices may be used to verify the predicted segmentation value, the actual value of the correlation between the sample slices may be used to verify a relation (that is, the predicted correlation) between the two predicted segmentation values. Therefore, an effect of further "supervision" can be achieved. That is, accuracy of segmentation can be further improved for the trained image segmentation model.

During the training, the part that is "configured to determine the correlation between the sample slices" in the image segmentation model can use information (that is, the correlation between the sample slices) other than the annotation for the target object on the sample slice to train the image segmentation model, such that priori knowledge (which can be used by a machine learning algorithm) of a shape can be learned. Therefore, the part that is "configured to determine the correlation between the sample slices" may further be called a proxy supervision part. Details are not further described herein.

(II) Segmentation of the to-be-segmented medical image through the trained image segmentation model

The trained image segmentation model includes the residual network, the segmentation network, and the fusion network. The residual network may include a first residual network branch and a second residual network branch. The segmentation network includes a first segmentation network branch and a second segmentation network branch.

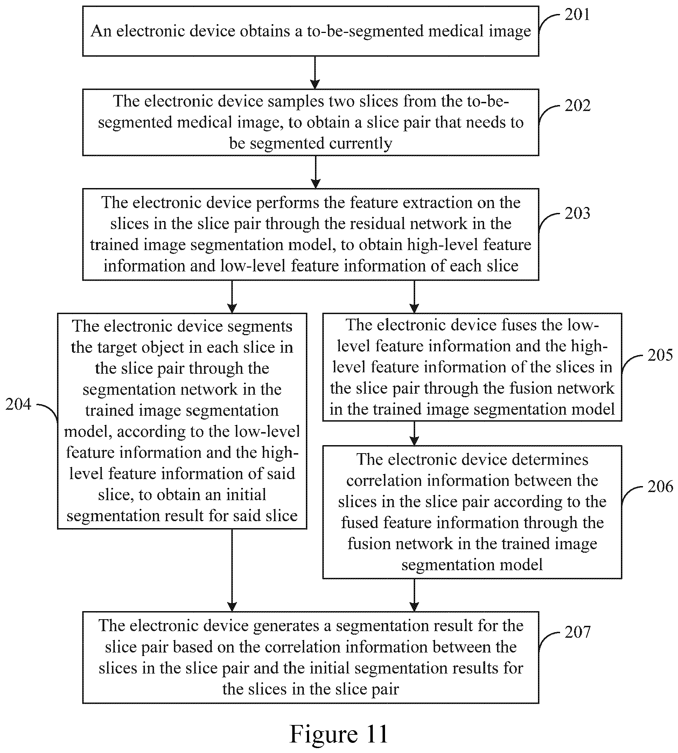

As shown in Figure 11, a specific process of the method for segmenting the medical image may include following steps 201 to 207.

In step 201, an electronic device obtains a to-be-segmented medical image.

For example, the electronic device may receive a medical image transmitted by various medical image acquisition devices, such as an MRI scanner or a CT scanner, after the medical image acquisition device collects an image of a human liver. The electronic device may determine such medical image as the to-be-segmented medical image.

In an optional embodiment, the received medical image may be preprocessed through an operation, such as deduplicating, cropping, rotating, and/or flipping.

In step 202, the electronic device samples two slices from the to-be-segmented medical image, to obtain a slice pair that needs to be segmented currently.

For example, the electronic device may sample two consecutive slices along the z-axis based on a certain time interval, to construct the slice pair. Alternatively, the electronic device may sample two slices randomly along the z-axis based on a certain time interval, to construct the slice pair.

In an optional embodiment, patches that overlapping partially may serve as a sampling unit (i.e. patch-wise sampling) when sampling the slices, in order to provide a sufficient receptive field.

A patch is one of basic units of an image. There are various types of basic units for an image. Besides being patch-wise, the sampling may be pixel-wise manner, image-wise, or the like. The pixel-wise sampling is performed at a pixel level, which is commonly called "pixels". The image-wise sampling is performed at an image level (that is, an image serves as a unit). The patch-wise sampling lies between the pixel level and the image level. Each patch includes multiple pixels.

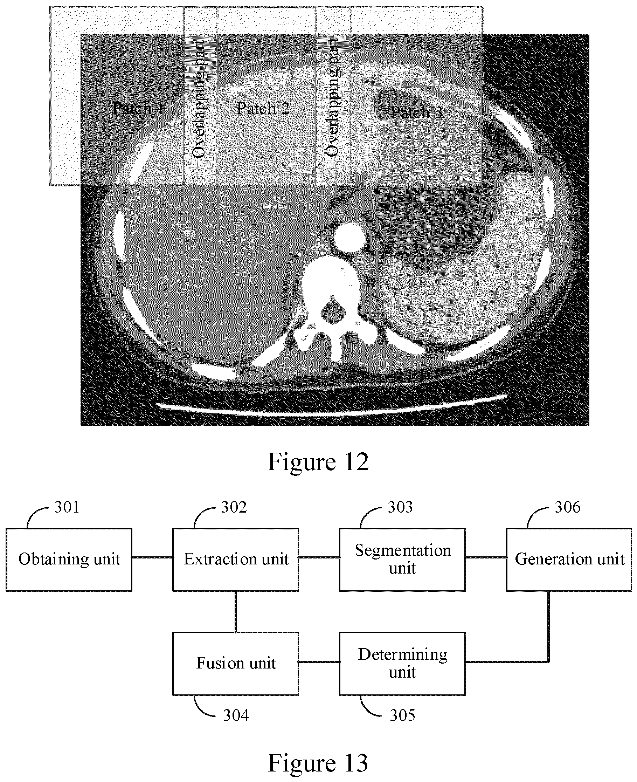

For example, reference is made to Figure 12. When sampling the slices, a patch may serve as a unit, and the sampling is from one patch to another. A currently sampled patch and a previous sampled patch overlap partially. For example, a patch 2 and a patch 1 overlap, and the patch 3 and the patch 2 also overlap. A size of the overlapping region may be set according to a practical requirement.

In addition, the two slices sampled into the slice pair may not overlap, may overlap partially, or may overlap completely (that is, they are a same slice). In the trained image segmentation model, similar network structures in different branches may have different parameters (for example, the ASPP modules for different branches do not share parameters). Therefore, the initial segmentation results outputted from different branches may be different for the same input. Accordingly, the inputted two slices being identical is not meaningless.

In step 203, the electronic device performs the feature extraction on the slices in the slice pair through the residual network in the trained image segmentation model, to obtain high-level feature information and low-level feature information of each slice.

For example, the slice pair includes a first slice and a second slice, as shown in Figure 8. In such case, the step 203 may include specific steps as follows.

The electronic device performs feature extraction on the first slice through the first residual network branch, such as ResNet-18, in the residual network, to obtain the high-level feature information and the low-level feature information of different scales corresponding to the first slice. Then, the electronic device processes the high-level feature information corresponding to the first slice through the ASPP, to obtain the high-level feature information of multiple scales corresponding to the first slice.

Moreover, the electronic device performs feature extraction on the second slice through the second residual network branch, such as ResNet-18, in the residual network, to obtain the high-level feature information and the low-level feature information of different scales corresponding to the second slice. Then, the electronic device processes the high-level feature information corresponding to the second slice through the ASPP, to obtain the high-level feature information of multiple scales corresponding to the second slice.

The first residual network branch and the second residual network branch may share parameters, and the ASPP modules connected to the two branches may not be share parameters. Specific parameters of the ASPP modules may be determined according to a practical requirement. Details are not described herein.

In step 204, the electronic device segments the target object in each slice in the slice pair through the segmentation network in the trained image segmentation model, according to the low-level feature information and the high-level feature information of said slice, to obtain an initial segmentation result for said slice.

It is further taken as an example that the slice pair includes a first slice and a second slice. In such case, the step 204 may include following specific operations, as shown in Figure 8.

The electronic device performs convolution with a convolution kernel of a $1 \times 1$ dimension on the low-level feature information and the high-level feature information of the first slice through the first segmentation network branch, up-samples the high-level feature information subject to the convolution to a same size as the low-level feature information subject to the convolution, concatenates the up-sampled high-level feature information and the low-level feature information subject to the convolution, to obtain the concatenated feature information of the first slice. Afterwards, the electronic device performs convolution with a convolution kernel of a $3 \times 3$ dimension on the concatenated feature information, and then up-samples the concatenated feature information subject to the convolution to a same size as the first slice. Thereby, the initial segmentation result for the first slice can be obtained.

Similar operations may be performed in the other branch. That is, the electronic device performs convolution with a convolution kernel of a $1 \times 1$ dimension on the low-level feature information and the high-level feature information of the second slice through the second segmentation network branch, up-samples the high-level feature information subject to the convolution to a same size as the low-level feature information subject to the convolution, concatenates the up-sampled high-level feature information and the low-level feature information subject to the convolution, to obtain the concatenated feature information of the second slice. Afterwards, the electronic device performs convolution with a convolution kernel of a $3 \times 3$ dimension on the concatenated feature information, and then up-samples the concatenated feature information subject to the convolution to a same size as the second slice. Thereby, the initial segmentation result for the second slice can be obtained.

In step 205, the electronic device fuses the low-level feature information and the high-level feature information of the slices in the slice pair through the fusion network in the trained image segmentation model. Reference is made to Figure 8, where a specific embodiment may be as follows.

In one aspect, the low-level feature information of the first slice and the low-level feature information of the second slice are element-wise summed to obtain fused low-level feature information. In another aspect, the high-level feature information of the first slice and the high-level feature information of the second slice are element summed to obtain the fused high-level feature information. Then, the fused low-level feature information and the fused high-level feature information are processed through the channel attention module in the fusion network in the trained segmentation model, to obtain the processed feature information. Further, the processed feature information and the fused high-level feature information are element-wise summed, so as to obtain the fused feature information.

The steps 204 and 205 may be performed in arbitrary orders.

In step 206, the electronic device determines correlation information between the slices in the slice pair according to the fused feature information through the fusion network in the trained image segmentation model.

For example, the electronic device may specifically select a feature belonging to a liver region from the fused feature information, determine the foreground regions (that is, the region in which the liver is located) in the first slice and the foreground region (that is, the region in which the liver is located) in the second slice according to the selected feature, and determine the remaining region in the first slice other than a union of the foreground regions of the two slices as the background region of the slice pair. Then, a pixel belonging to the foreground region of only either of the two slices in the fused feature information serves as a difference pixel of the slice pair, and a pixel belonging to the foreground regions of both slices in the fused feature information serves as an intersection pixel. Afterwards, pixel types are labeled for the background region, the difference pixels, and the intersection pixels of the slice pair. For example, different pixel values or different colors are applied to distinguish these regions, so as to obtain the correlation information between the first slice and the second slice.

In an optional embodiment, the operation of determining correlation information between the slices in the slice pair according to the fused feature information may be implemented through various network structures. In a specific embodiment as shown in Figure 8, the fused feature information is subject to convolution through a convolutional layer having a convolution kernel of a $3 \times 3$ dimension, and then the fused feature information subject to the convolution is up-sampled to a same size as the inputted slices (the first slice and the second slice). Thereby, the correlation information between the first slice and the second slice, for example, the background region of the slice pair, the intersection pixels between the first slice and the second slice, and the difference pixels between the first slice and the second slice, can be obtained.

In step 207, the electronic device generates a segmentation result for the slice pair based on the correlation information between the slices in the slice pair and the initial segmentation results for the slices in the slice pair.

It is further taken as an example that the slice pair includes a first slice and a second slice. In such case, a segmentation result for the second slice may be predicted according to the correlation information between the slices and the initial segmentation result for the first slice, to obtain a predicted segmentation result for the second slice. A segmentation result for the first slice is predicted according to the correlation information between the slices and an initial segmentation result for the second slice, to obtain the predicted segmentation result for the first slice. Then, the predicted segmentation result for the first slice and the initial segmentation result for the first slice are averaged to obtain the adjusted segmentation result for the first slice, and the predicted segmentation result for the second slice and the initial segmentation result for the second slice are averaged to obtain the adjusted segmentation result for the second slice. Further, the adjusted segmentation result for the first slice and the adjusted segmentation result for the second slice are fused, for example, are averaged. A result of the averaging is binarized, so as to obtain the segmentation result for the slice pair.

Afterwards, the electronic device may return to the step 202, in which another two slices are sampled from the to-be-segmented medical image to serve as a slice pair that needs to be segmented currently. Such slice pair is processed based on the steps 203 to 207, to obtain a segmentation result corresponding to such slice pair. The rest process can be deduced by analogy. After segmentation results of all slice pairs from the to-be-segmented medical image are obtained, the segmentation results of these slice pairs are combined based on a sequence of the slices. Thereby, a segmentation result (that is, a 3D segmentation result) of the to-be-segmented medical image can be obtained.

In this embodiment, an image segmentation model may be trained in advance through sample slice pair(s) and the correlation (information such as priori knowledge) between sample slices in the sample slice pair. After the to-be-segmented medical image is obtained, the image segmentation model may be used to perform the feature extraction on the slice pairs from the to-be-segmented medical image based on different receptive fields, so as to obtain the high-level feature information and the low-level feature information of each slice in the slice pair. Then, in one aspect, the liver region in each slice in the slice pair is segmented according to the low-level feature information and the high-level feature information of said slice, to obtain the initial segmentation result for said slice. In another aspect, the low-level feature information and the high-level feature information of the slices in the slice pair are fused, and the correlation information between the slices is determined according to the fused feature information. Afterwards, the initial segmentation results for the slices in the slice pair are adjusted based on the obtained correlation information, to obtain the final segmentation result that is required. During the training, besides considering the annotation in the single slices, other priori knowledge such as the correlation between the slices also serves as a kind of learning data, which implements a supervision effect on the accuracy of slice segmentation. Therefore, the segmentation accuracy of the image segmentation model can be improved. In addition, since the fusion network is introduced, variations of a shape of the segmentation object in training samples would not result in model over-fitting in case of a small quantity of the training samples.

In addition, correlation among the slices from the 3D medical image is considered when using the trained image segmentation model. Hence, the two slices (the slice pair) may be segmented at the same time through the trained image segmentation model, and the segmentation results are further adjusted based on the correlation between the slices. Thereby, it is ensured that shape information of the target object (for example, the liver) can be captured more accurately, improving the segmentation accuracy.

In order to better implement the foregoing method, an apparatus for segmenting a medical image is further provided according to an embodiment of the present disclosure. The apparatus may be integrated in an electronic device, for example, a device such as a server or a terminal. The terminal may include a tablet computer, a notebook computer, a PC, a medical image acquisition device, an electronic medical equipment, or the like.

For example, reference is made to Figure 13. An apparatus for segmenting a medical image may include an obtaining unit 301, an extraction unit 302, a segmentation unit 303, a fusion unit 304, a determining unit 305, a generation unit 306, and the like.

## (1) Obtaining unit 301

The obtaining unit 301 is configured to obtain a slice pair. The slice pair includes two slices obtained by sampling a to-be-segmented medical image.

In a specific example, the obtaining unit 301 may be configured to obtain the to-be-segmented medical image, and sample two slices from the to-be-segmented medical image to construct the slice pair.

The to-be-segmented medical image may be provided to the obtaining unit 301, after a medical image acquisition device from various types such as an MRI scanner or a CT scanner collects an image a biological tissue, such as a heart or a liver.

## (2) Extraction unit 302

The extraction unit 302 is configured to perform feature extraction on each slice in the slice pair based on different receptive fields, to obtain high-level feature information and low-level feature information of each slice.

There may be various manners of performing the feature extraction on the slice based on different receptive fields. For example, the feature extraction may be implemented through a residual network.

In a specific embodiment, the extraction unit 302 may be configured to perform the feature extraction on each slice in the slice pair through a residual network in a trained segmentation model, to obtain the high-level feature information and the low-level feature information of said slice.

For example, the slice pair includes a first slice and a second slice, and the residual network includes a first residual network branch and a second residual network branch that are in parallel and of the same structure. In such case, the extraction unit 302 may perform the feature extraction on the first slice through the first residual network branch in the residual network, to obtain the high-level feature information and the low-level feature information of different scales corresponding to the first slice. Further, the extraction unit 302 may perform the feature extraction on the second slice through the second residual network branch in the residual network, to obtain the high-level feature information and the low-level feature information of different scales corresponding to the second slice.

The network structures of the first residual network branch and the second residual network branch may be determined according to a practical requirement. For example, ResNet-18 may be applied. In addition, the first residual network branch and the second residual network branch may share parameters. Specific parameters may be set according to a practical requirement.

In an optional embodiment, SPP processing such as ASPP processing may be further performed on the obtained high-level feature information, so as to obtain the high-level feature information of more scales. Details may refer to the foregoing method embodiments, and are not described again herein.

## (3) Segmentation unit 303

The segmentation unit 303 is configured to segment a target object in each slice in the slice pair according to the low-level feature information and the high-level feature information of said slice, to obtain an initial segmentation result for said slice.

In a specific example, the segmentation unit 303 may be configured to segment the target object in each slice in the slice pair through a segmentation network in the trained segmentation model according to the low-level feature information and the high-level feature information of said slice, to obtain the initial segmentation result for said slice. In a specific example, the segmentation unit 303 is configured to perform following operations.

For each slice in the slice pair, the low-level feature information and the high-level feature information of the slice are separately subject to convolution through the segmentation network in the trained segmentation model. The high-level feature information subject to the convolution is up-sampled to a same size as the low-level feature information subject to the convolution. The up-sampled high-level feature information and the low-level feature information subject to the convolution are concatenated to obtain concatenated feature information. Pixels belonging to the target object in the slice are selected according to the concatenated feature information, to obtain the initial segmentation result for the slice. Details may refer to the foregoing method embodiments, and are not described again herein.

## (4) Fusion unit 304

The fusion unit 304 is configured to fuse the low-level feature information and the high-level feature information of the slices in the slice pair.

In a specific example, the fusion unit 304 is configured to fuse the low-level feature information and the high-level feature information of the slices in the slice pair through a fusion network in the trained segmentation model.

There may be various manners for fusing the low-level feature information and the high-level feature information. For example, the low-level feature information and the high-level feature information may be fused in a manner of "element-wise sum (Sum)" or channel superimposition. The "element-wise sum" is taken as an example. In such case, the fusion unit 304 may be configured to perform following operations.

The low-level feature information of the slices in the slice pair are element-wise summed to obtain fused low-level feature information. The high-level feature information of the slices in the slice pair are element-wise summed to obtain fused high-level feature information. The fused low-level feature information and the fused high-level feature information are fused through the fusion network in the trained segmentation model, to obtain the fused feature information.

In an optional embodiment, there may be various manners of fusing the fused low-level feature information and the fused high-level feature information. In a specific example, the manner may be as follows.

The fusion unit 304 is configured to sum the fused low-level feature information and the fused high-level feature information element-wise through the fusion network in the trained segmentation model, to obtain the fused feature information.

In an optional embodiment, different features have different effects on a specific task. Hence, in order to make better use of the features to improve accuracy of image segmentation, an attention mechanism may be further applied to enable a network to assign different weights to different feature information automatically. Thereby, the network can fuse the feature information selectively.

In a specific embodiment, the fusion unit 304 may be configured to: assign a weight to the fused low-level feature information according to the fused low-level feature information and the fused high-level feature information through a channel attention module in the fusion network in the trained segmentation model, to obtain weighted feature information; multiply the weighted feature information element-wise with the fused low-level feature information, to obtain processed feature information; and sum the processed feature information and the fused high-level feature information element-wise, to obtain the fused feature information.

A specific structure of the channel attention module may be determined according to a practical requirement. Details are not described herein.

(5) Determining unit 305

The determining unit 305 is configured to determine correlation information between the slices in the slice pair according to the fused feature information.

The target object is an object that needs to be recognized from a slice, for example, a liver in the segmentation on a liver image, a heart in the segmentation on a heart image, or the like.

For example, the determining unit 305 may include a selection subunit and a determining subunit.

The selection subunit may be configured to select a feature belonging to the target object from the fused feature information.

The determining subunit may be configured to determine the correlation information between the slices according to the selected feature. In a specific example, details may be as follows.

The determining subunit may be configured to: determine a background region and a foreground region of each slice in the slice pair according to the selected feature, calculate a difference pixel and an intersection pixel between the foreground regions of the slices, and generate the correlation information between the slices in the slice pair according to the background region, the difference pixel(s), and the intersection pixel(s).

In a specific example, the determining subunit may be configured to: determine a pixel in the fused feature information belonging to the foreground region of only either slice in the slice pair as the difference pixel; and determine a pixel in the fused feature information belonging to the foreground regions of the both slices in the slice pair as the intersection pixel.

In another specific example, the determining subunit is configured to label pixel types for the background region, the difference pixel(s), and the intersection pixel(s), to obtain the correlation information between the slices. Details may be refer to the foregoing method embodiments, and are not described again herein.

(6) Generation unit 306

The generation unit 306 is configured to generate a segmentation result for the slice pair based on the correlation information and the initial segmentation results for the slices in the slice pair.

For example, the slice pair includes a first slice and a second slice. In such case, the generation unit 306 may be configured to perform following specific operations.

A segmentation result for the second slice is predicted according to the correlation information and the initial segmentation result for the first slice, to obtain the predicted segmentation result for the second slice. A segmentation result for the first slice is predicted according to the correlation information and the initial segmentation result for the second slice, to obtain the predicted segmentation result for the first slice. The initial segmentation result for the first slice is adjusted based on the predicted segmentation result for the first slice, to obtain the adjusted segmentation result for the first slice. The initial segmentation result for the second slice is adjusted based on the predicted segmentation result for the second slice, to obtain the adjusted segmentation result for the second slice. The adjusted segmentation result for the first slice and the adjusted segmentation result for the second slice are fused to obtain the segmentation result for the slice pair.

In a specific example, the generation unit 306 may be configured to: average the predicted segmentation result for the first slice and the initial segmentation result for the first slice, to obtain the adjusted segmentation result for the first slice; and average the predicted segmentation result for the second slice and the initial segmentation result for the second slice, to obtain the adjusted segmentation result for the second slice.

In another specific example, the generation unit 306 may be configured to average the adjusted segmentation result for the first slice and the adjusted segmentation result for the second slice, and binarize a result of the averaging, to obtain the segmentation result for the slice pair.

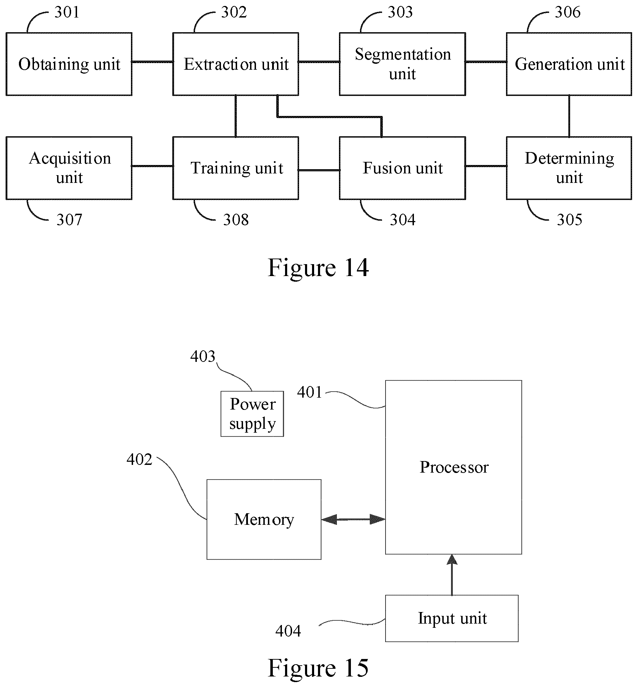

In an optional embodiment, the trained image segmentation model may be trained based on multiple sample slice pairs annotated with actual values. In a specific embodiment, the trained image segmentation model may be preset by operation personnel or may be trained by the apparatus for segmenting the medical image. That is, as shown in Figure 14, the apparatus for segmenting the medical image may further include an acquisition unit 307 and a training unit 308.

The acquisition unit 307 may be configured to acquire multiple sample slice pairs annotated with actual values.

The sample slice pair includes two sample slices obtained by sampling a sample medical image. Details may refer to the foregoing embodiments, and are not described again herein.

The training unit 308 may be configured to: perform the feature extraction on each sample slice in the sample slice pair through a residual network in a preset segmentation model, to obtain high-level feature information and low-level feature information of each sample slice; segment the target object in each sample slice in the sample slice pair through a segmentation network in the preset segmentation model according to the low-level feature information and the high-level feature information of said sample slice, to obtain a predicted segmentation value of said sample slice; fuse the low-level feature information and the high-level feature information of the sample slices in the sample slice pair through a fusion network in the preset segmentation model; predict the correlation information between the sample slices in the sample slice pair according to the fused feature information; and converge the preset segmentation model according to the actual values, the predicted segmentation values of the sample slices in the sample slice pair, and the predicted correlation information, to obtain the trained segmentation model.

In a specific example, the training unit 308 may is configured to converge the segmentation model according to the actual values, the predicted segmentation values of the sample slices in the sample slice pair, and the predicted correlation information through a Dice Loss function, to obtain the trained segmentation model.

Details of the Dice Loss function may refer to the foregoing method embodiments, and are not described again herein.

In specific implementations, the foregoing units may be implemented as independent entities, or may be randomly combined and implemented as a same entity or several entities. Specific implementations of the foregoing units may refer to the foregoing method embodiments. Details are not described again herein.

As can be learned from above, in these embodiments, after the slice pair is obtained, the extraction unit 302 may perform the feature extraction on each slice in the slice pair based on the different receptive fields, to obtain the high-level feature information and the low-level feature information of each slice. Then, in one aspect, the segmentation unit 303 segments the target object in each slice in the slice pair according to the low-level feature information and the high-level feature information of said slice, to obtain an initial segmentation result for said slice. In another aspect, the fusion unit 304 fuses the low-level feature information and the high-level feature information of the slices in the slice pair, and the determination unit 305 determines the correlation information between the slices in the slice pair according to the fused feature information. Afterwards, the generation unit 306 generates the segmentation result for the slice pair based on the correlation information between the slices in the slice pair and the initial segmentation results for the slices in the slice pair. Correlation among slices of a 3D medical image is considered in embodiments of the present disclosure. Accordingly, two slices (the slice pair) are segmented at the same time, and the segmentation results are further adjusted based on a correlation relationship between the slices. It is ensured that shape information of a target object (such as a liver) can be captured more accurately, improving segmentation accuracy.

An electronic device is further provided according to an embodiment of the present disclosure. Reference is made to Figure 15, which is a schematic structural diagram of an electronic device according to an embodiment of the present disclosure.

The electronic device may include: a processor 401 including one or more processing cores, a memory 402 including one or more computer-readable storage media, a power supply 403, an input unit 404, and other components. Those skilled in the art can understand that the electronic device is not limited to the structure as shown in Figure 15, and may include more or fewer components than those as shown in the figure. Some components may be combined, and the components may be deployed in a different manner.

The processor 401 is a control center of the electronic device, and connects various parts of the entire electronic device via various interfaces and lines. The processor 401 implements various functions and data processing of the electronic device, by running or executing multiple instructions (software programs and/or modules) stored in the memory 402 and invoking data stored in the memory 402. Thereby, the processor 401 monitors the overall electronic device. In an optional embodiment, the processor 401 may include one or more processing cores. The processor 401 may integrate an application processor and a modem processor. The application processor mainly processes and operates a storage medium, a user interface, an application program, and the like. The modem processor mainly processes wireless communication. It can be understood that the modem processor may not be integrated into the processor 401.

The memory 402 may be configured to software programs and modules. The processor 401 runs the multiple instructions, software programs and modules stored in the memory 402, to execute various function applications and data processing. The memory 402 may mainly include a program storage area and a data storage area. The program storage area may store and operate a storage medium, an application program required by at least one function (for example, a sound playback function and an image display function), and the like. The data storage area may store data created according to usage of the electronic device, and the like. In addition, the memory 402 may include a high speed random access memory, and may further include a non-volatile memory, such as at least one magnetic disk storage device, a flash memory, or another non-volatile solid-state storage device. Correspondingly, the memory 402 may further include a memory controller, to enable the processor 401 to access the memory 402.

The electronic device further includes the power supply 403 for supplying power to the components. The power supply 403 may be logically connected to the processor 401 via a power management storage medium, thereby implementing functions such as charging, discharging, and power consumption management through the power management storage medium. The power supply 403 may further include one or more direct-current or alternate-current power supplies, one or more re-charge storage mediums, one or more power-supply fault-detection circuits, one or more power-supply converters or inverters, one or more power-supply state indicators, or another component.

The electronic device may further include the input unit 404. The input unit 404 may be configured to receive inputted digit or character information, and generate a signal input related to user settings and function control, from a keyboard, a mouse, a joystick, optics, or a trackball.

Although not shown in the figure, the electronic device may further include a display unit, and the like, which is not described in detail herein. In a specific embodiment, the processor 401 in the electronic device may load executable files corresponding to a process of one or more application programs into the memory 402 according to following instructions, and runs application programs stored in the memory 402 to implement the various functions as follows.

A slice pair is obtained, where the slice pair includes two slices obtained by sampling a to-be-segmented medical image.

Feature extraction is performed on each slice in the slice pair based on different receptive fields, to obtain high-level feature information and low-level feature information of each slice in the slice pair.

A target object in each slice in the slice pair is segmented according to the low-level feature information and the high-level feature information of said slice, to obtain an initial segmentation result for said slice.

The low-level feature information and the high-level feature information of the slices in the slice pair are fused, and correlation information between the slices in the slice pair is determined according to the fused feature information.

A segmentation result for the slice pair is generated based on the correlation information and the initial segmentation results for the slices in the slice pair.

In a specific example, the feature extraction may be performed on each slice in the slice pair through a residual network in a trained segmentation model, to obtain the high-level feature information and the low-level feature information of each slice. Then, for each slice in the slice pair, the target object in said slice is segmented through a segmentation network in the trained segmentation model according to the low-level feature information and the high-level feature information of said slice, to obtain the initial segmentation result for said slice. The low-level feature information and the high-level feature information of the slices in the slice pair are fused through a fusion network in the trained segmentation model, and the correlation information between the slices in the slice pair is determined according to the fused feature information. Afterwards, the segmentation result for the slice pair is generated based on the correlation information and the initial segmentation results for the slices in the slice pair.

In an optional embodiment, the trained segmentation model may be trained based on multiple sample slice pairs annotated with actual values. In a specific embodiment, the trained segmentation model may be preset by operation personnel or may be trained by an apparatus for segmenting a medical image. That is, the processor 401 may further run the application program stored in the memory 402 to implement following functions.

Multiple sample slice pairs annotated with actual values are acquired.

The feature extraction is performed on each sample slice in the sample slice pair through a residual network in a preset segmentation model, to obtain high-level feature information and low-level feature information of each sample slice.

A target object in each sample slice in the sample slice pair is segmented through a segmentation network in the preset segmentation model according to the low-level feature information and the high-level feature information of the sample slice, to obtain a predicted segmentation value of the sample slice.

The low-level feature information and the high-level feature information of the sample slices in the sample slice pair are fused through a fusion network in the preset segmentation model, and correlation information between the sample slices in the sample slice pair is predicted according to the fused feature information.

The preset segmentation model is converged according to the actual values, the predicted segmentation values of the sample slices in the sample slice pair, and the predicted correlation information, to obtain the trained segmentation model.

Details of the foregoing operations may refer to the foregoing embodiments, and are not described again herein.

As can be learned from above, in these embodiments, after the slice pair is obtained, the feature extraction may be performed on each slice in the slice pair based on the different receptive fields, to obtain the high-level feature information and the low-level feature information of each slice. Then, in one aspect, the target object in each slice in the slice pair is segmented according to the low-level feature information and the high-level feature information of said slice, to obtain an initial segmentation result for said slice. In another aspect, the low-level feature information and the high-level feature information of the slices in the slice pair are fused, and the correlation information between the slices in the slice pair is determined according to the fused feature information. Afterwards, the segmentation result for the slice pair is generated based on the correlation information between the slices in the slice pair and the initial segmentation results for the slices in the slice pair. Correlation among slices of a 3D medical image is considered in embodiments of the present disclosure. Accordingly, two slices (the slice pair) are segmented at the same time, and the segmentation results are further adjusted based on a correlation relationship between the slices. It is ensured that shape information of a target object (such as a liver) can be captured more accurately, improving segmentation accuracy.

Those skilled in the art may appreciate that all or some steps of the methods in the foregoing embodiments may be implemented through instructions, or relevant hardware controlled by instructions. The instructions may be stored in a computer-readable medium, and may be loaded and executed by a processor.

In view of the above, a storage medium is further provided according to an embodiment of the present disclosure. The storage medium stores multiple instructions. The instructions can be loaded by a processor to perform the steps in any method for segmenting the medical image according to embodiments of the present disclosure. For example, the instructions may be loaded to perform following steps.

A slice pair is obtained, where the slice pair includes two slices obtained by sampling a to-be-segmented medical image.

Feature extraction is performed on each slice in the slice pair based on different receptive fields, to obtain high-level feature information and low-level feature information of each slice in the slice pair.

A target object in each slice in the slice pair is segmented according to the low-level feature information and the high-level feature information of said slice, to obtain an initial segmentation result for said slice.

The low-level feature information and the high-level feature information of the slices in the slice pair are fused, and correlation information between the slices in the slice pair is determined according to the fused feature information.

A segmentation result for the slice pair is generated based on the correlation information and the initial segmentation results for the slices in the slice pair.

In a specific example, the feature extraction may be performed on each slice in the slice pair through a residual network in a trained segmentation model, to obtain the high-level feature information and the low-level feature information of each slice. Then, for each slice in the slice pair, the target object in said slice is segmented through a segmentation network in the trained segmentation model according to the low-level feature information and the high-level feature information of said slice, to obtain the initial segmentation result for said slice. The low-level feature information and the high-level feature information of the slices in the slice pair are fused through a fusion network in the trained segmentation model, and the correlation information between the slices in the slice pair is determined according to the fused feature information. Afterwards, the segmentation result for the slice pair is generated based on the correlation information and the initial segmentation results for the slices in the slice pair.

In an optional embodiment, the trained segmentation model may be trained based on multiple sample slice pairs annotated with actual values. In a specific embodiment, the trained segmentation model may be preset by operation personnel or may be trained by an apparatus for segmenting a medical image. That is, the instructions may further be loaded to perform following steps.

Multiple sample slice pairs annotated with actual values are acquired.

The feature extraction is performed on each sample slice in the sample slice pair through a residual network in a preset segmentation model, to obtain high-level feature information and low-level feature information of each sample slice.

A target object in each sample slice in the sample slice pair is segmented through a segmentation network in the preset segmentation model according to the low-level feature information and the high-level feature information of the sample slice, to obtain a predicted segmentation value of the sample slice.

The low-level feature information and the high-level feature information of the sample slices in the sample slice pair are fused through a fusion network in the preset segmentation model, and correlation information between the sample slices in the sample slice pair is predicted according to the fused feature information.

The preset segmentation model is converged according to the actual values, the predicted segmentation values of the sample slices in the sample slice pair, and the predicted correlation information, to obtain the trained segmentation model.

Details of the foregoing operations may refer to the foregoing embodiments, and are not described again herein.

The storage medium may include a read-only memory (ROM), a random access memory (RAM), a magnetic disk, an optical disc, or the like.

The instructions stored in the storage medium may perform the steps of any method for segmenting the medical image according to embodiments of the present disclosure. Hence, the instructions can implement the beneficial effects that can be implemented by any method for segmenting the medical image according to embodiments of the present disclosure. Details may refer to the foregoing embodiments, and are not described again herein.

Hereinabove the method and the apparatus for segmenting the medical image, the electronic device, and the storage medium provided are described in detail according to the embodiments of the present disclosure. Principles and implementations of the present disclosure are described by using specific examples in this specification. The foregoing description of the embodiments is only intended to help understand the method and core idea of the methods of the present disclosure. Meanwhile, those skilled in the art may modify specific implementations and the application range according to the idea of the present disclosure.

**Claims**

1. A method for segmenting a medical image, comprising:

   obtaining (101) a slice pair, wherein the slice pair comprises two slices obtained by sampling a to-be-segmented medical image;
   performing (102) feature extraction on each slice in the slice pair based on different receptive fields through a convolutional neural network to obtain high-level feature information and low-level feature information of each slice in the slice pair, wherein the high-level feature information and the low-level feature information are feature maps;
   segmenting (103) a target object in each slice in the slice pair according to the low-level feature information and the high-level feature information of said slice, to obtain an initial segmentation result for said slice;
   fusing (104) the low-level feature information and the high-level feature information of the slices in the slice pair to obtain fused feature information, and determining (105) correlation information between the slices in the slice pair according to the fused feature information; and
   generating (106) a segmentation result for the slice pair, based on the correlation information and the initial segmentation results for the slices in the slice pair;
   wherein segmenting (103) the target object in each slice in the slice pair according to the low-level feature information and the high-level feature information of said slice comprises, for each slice in the slice pair:

      performing convolution separately on the low-level feature information and the high-level feature information of said slice through the segmentation network in the trained segmentation model;
      up-sampling the high-level feature information subject to the convolution to a same size as the low-level feature information subject to the convolution;
      concatenating the upsampled high-level feature information and the low-level feature information subject to the convolution to obtain concatenated feature information; and
      up-sampling the concatenated feature information, which is subject to another convolution, to a size of said slice to obtain the initial segmentation result for said slice;

   wherein determining (105) the correlation information between the slices in the slice pair according to the fused feature information comprises:

      selecting a feature belonging to the target object from the fused feature information;

determining a background region and a foreground region of each slice in the slice pair according to the selected feature, wherein the foreground region is a region having the target object in said slice and the background is a region other than the foreground region in said slice;

calculating a difference pixel and an intersection pixel between the foreground regions of the slices in the slice pair; and

labeling a pixel type for the background region, the difference pixel, and the intersection pixel, to obtain the correlation information between the slices in the slice pair.

2. The method according to claim 1, wherein the calculating the difference pixel and the intersection pixel between the foreground regions of the slices in the slice pair comprises:

determining, in the fused feature information, a pixel belonging to the foreground region of only either slice in the slice pair as the difference pixel; and

determining, in the fused feature information, a pixel belonging to the foreground regions of both slices in the slice pair as the intersection pixel.

3. The method according to claim 1 or 2, wherein the slice pair comprises a first slice and a second slice; and generating (105) the segmentation result for the slice pair based on the correlation information and the initial segmentation results for the slices in the slice pair comprises:

predicting a segmentation result for the second slice according to the correlation information and an initial segmentation result for the first slice, to obtain a predicted segmentation result for the second slice;

predicting a segmentation result for the first slice according to the correlation information and an initial segmentation result for the second slice, to obtain a predicted segmentation result for the first slice;

adjusting the initial segmentation result for the first slice based on the predicted segmentation result for the first slice, to obtain an adjusted segmentation result for the first slice;

adjusting the initial segmentation result for the second slice based on the predicted segmentation result for the second slice, to obtain an adjusted segmentation result for the second slice; and

fusing the adjusted segmentation result for the first slice and the adjusted segmentation result for the second slice, to obtain the segmentation result for the slice pair.

4. The method according to claim 3, wherein adjusting the initial segmentation result for the first slice based on the predicted segmentation result for the first slice to obtain the adjusted segmentation result for the first slice comprises: averaging the predicted segmentation result for the first slice and the initial segmentation result for the first slice, to obtain the adjusted segmentation result for the first slice; and

wherein adjusting the initial segmentation result for the second slice based on the predicted segmentation result for the second slice, to obtain the adjusted segmentation result for the second slice; comprises: averaging the predicted segmentation result for the second slice and the initial segmentation result for the second slice, to obtain the adjusted segmentation result for the second slice.

5. The method according to claim 3, wherein fusing the adjusted segmentation result for the first slice and the adjusted segmentation result for the second slice to obtain the segmentation result for the slice pair comprises: averaging the adjusted segmentation result for the first slice and the adjusted segmentation result for the second slice, and binarizing a result of the averaging, to obtain the segmentation result for the slice pair.

6. The method according to claim 1 or 2, wherein performing the feature extraction on each slice in the slice pair based on different receptive fields to obtain the high-level feature information and the low-level feature information of each slice in the slice pair comprises: performing the feature extraction on each slice in the slice pair through a residual network in a trained segmentation model, to obtain the high-level feature information and the low-level feature information of each slice;

wherein segmenting the target object in each slice in the slice pair according to the low-level feature information and the high-level feature information of said slice to obtain the initial segmentation result for said slice comprises: segmenting the target object in each slice in the slice pair through a segmentation network in the trained segmentation model, according to the low-level feature information and the high-level feature information of said slice, to obtain the initial segmentation result for said slice; and

wherein fusing the low-level feature information and the high-level feature information of the slices in the slice pair and determining the correlation information between the slices in the slice pair according to the fused feature information comprises:
fusing the low-level feature information and the high-level feature information of the slices in the slice pair and determining the correlation information between the slices in the slice pair according to the fused feature information, through a fusion network in the trained segmentation model.

7. The method according to claim 6, wherein fusing the low-level feature information and the high-level feature information of the slices in the slice pair through the fusion network in the trained segmentation model comprises:

summing the low-level feature information of the slices in the slice pair element-wise, to obtain fused low-level feature information;
summing the high-level feature information of the slices in the slice pair element-wise, to obtain fused high-level feature information; and
fusing the fused low-level feature information and the fused high-level feature information through the fusion network in the trained segmentation model, to obtain the fused feature information.

8. The method according to claim 7, wherein fusing the fused low-level feature information and the fused high-level feature information through the fusion network in the trained segmentation model to obtain the fused feature information comprises:

summing the fused low-level feature information and the fused high-level feature information element-wise through the fusion network in the trained segmentation model, to obtain the fused feature information; or assigning a weight to the fused low-level feature information according to the fused low-level feature information and the fused high-level feature information through a channel attention module in the fusion network in the trained segmentation model, to obtain weighted feature information; multiplying the weighted feature information element-wise with the fused low-level feature information, to obtain processed feature information; and summing the processed feature information and the fused high-level feature information element-wise, to obtain the fused feature information.

9. The method according to claim 6, wherein before performing the feature extraction on each slice in the slice pair through the residual network in the trained segmentation model, to obtain the high-level feature information and the low-level feature information of each slice, the method further comprises:

acquiring a plurality of sample slice pairs annotated with actual values, wherein each sample slice pair comprises two sample slices obtained by sampling a sample medical image;
performing feature extraction on each sample slice in the sample slice pair through a residual network in a preset segmentation model, to obtain high-level feature information and low-level feature information of each sample slice;
segmenting a target object in each sample slice in the sample slice pair through a segmentation network in the preset segmentation model, according to the low-level feature information and the high-level feature information of said sample slice, to obtain a predicted segmentation value of said sample slice;
fusing the low-level feature information and the high-level feature information of the sample slices in the sample slice pair through a fusion network in the preset segmentation model, and predicting correlation information between the sample slices in the sample slice pair according to the fused feature information; and
converging the preset segmentation model according to the actual values, the predicted segmentation values of the sample slices in the sample slice pair, and the predicted correlation information, to obtain the trained segmentation model.

10. An electronic device, comprising a memory and a processor, wherein:

the memory stores an application program, and
the processor is configured to run the application program in the memory, to perform the method according to any one of claims 1 to 9.

11. A storage medium, storing a plurality of instructions, which,when executed by a processor cause:
the processor to perform the method according to any one of claims 1 to 9.

**Patentansprüche**

1. Verfahren zum Segmentieren eines medizinischen Bildes, umfassend:

   Erhalten (101) eines Scheibenpaares, wobei das Scheibenpaar zwei Scheiben umfasst, die durch Abtasten eines zu segmentierenden medizinischen Bildes erhalten werden;
   Durchführen (102) einer Merkmalsextraktion an jeder Scheibe des Scheibenpaars auf der Grundlage unterschiedlicher rezeptiver Felder durch ein neuronales Faltungsnetzwerk, um eine High-Level-Merkmalsinformation und eine Low-Level-Merkmalsinformation für jede Scheibe des Scheibenpaars zu erhalten, wobei die High-Level-Merkmalsinformation und die Low-Level-Merkmalsinformation Merkmalskarten sind;
   Segmentieren (103) eines Zielobjekts in jeder Scheibe des Scheibenpaars gemäß der Low-Level-Merkmalsinformation und der High-Level-Merkmalsinformation der Scheibe, um ein anfängliches Segmentierungsergebnis für die Scheibe zu erhalten;
   Verschmelzen (104) der Low-Level-Merkmalsinformation und der High-Level-Merkmalsinformation der Scheiben in dem Scheibenpaar, um eine verschmolzene Merkmalsinformation zu erhalten, und Bestimmen (105) von einer Korrelationsinformation zwischen den Scheiben des Scheibenpaars gemäß der verschmolzenen Merkmalsinformation; und
   Erzeugen (106) eines Segmentierungsergebnisses für das Scheibenpaar, basierend auf der Korrelationsinformation und den anfänglichen Segmentierungsergebnissen für die Scheiben in dem Scheibenpaar;
   wobei das Segmentieren (103) des Zielobjekts in jeder Scheibe des Scheibenpaars gemäß der Low-Level-Merkmalsinformation und der High-Level-Merkmalsinformation der Scheibe für jede Scheibe des Scheibenpaars umfasst:

   Durchführen einer getrennten Faltung der Low-Level-Merkmalsinformation und der High-Level-Merkmalsinformation der Scheibe durch das Segmentierungsnetz in dem trainierten Segmentierungsmodell;
   Hochabtasten der High-Level-Merkmalsinformation, die der Faltung unterliegen, auf dieselbe Größe wie die Low-Level-Merkmalsinformation, die der Faltung unterliegen;
   Verketten der hochabgetasteten High-Level-Merkmalsinformation und der Low-Level-Merkmalsinformation, die der Faltung unterliegen, um eine verkettete Merkmalsinformation zu erhalten; und
   Hochabtasten der verketteten Merkmalsinformation, die einer weiteren Faltung unterworfen ist, auf eine Größe der Scheibe, um das anfängliche Segmentierungsergebnis für die Scheibe zu erhalten;

   wobei das Bestimmen (105) der Korrelationsinformation zwischen den Scheiben des Scheibenpaars gemäß der verschmolzenen Merkmalsinformation umfasst:

   Auswählen eines zu dem Zielobjekt gehörenden Merkmals aus der verschmolzenen Merkmalsinformation;
   Bestimmen eines Hintergrundbereichs und eines Vordergrundbereichs jeder Scheibe des Scheibenpaars gemäß dem ausgewählten Merkmal, wobei der Vordergrundbereich ein Bereich mit dem Zielobjekt in der Scheibe ist und der Hintergrund ein anderer Bereich als der Vordergrundbereich in der Scheibe ist;
   Berechnen eines Differenzpixels und eines Schnittpunktpixels zwischen den Vordergrundregionen der Scheiben in dem Scheibenpaar; und
   Kennzeichnen eines Pixeltyps für den Hintergrundbereich, des Differenzpixels und des Schnittpunktpixels, um die Korrelationsinformation zwischen den Scheiben des Scheibenpaars zu erhalten.

2. Verfahren nach Anspruch 1, wobei das Berechnen des Differenzpixels und des Schnittpunktpixels zwischen den Vordergrundbereichen der Scheiben des Scheibenpaars umfasst:

   Bestimmen, in den verschmolzenen Merkmalsinformationen, eines Pixels, das zu dem Vordergrundbereich von nur einer Scheibe des Scheibenpaars gehört, als das Differenzpixel; und
   Bestimmen, in den verschmolzenen Merkmalsinformationen, eines Pixels, das zu den Vordergrundbereich beider Scheiben in dem Scheibenpaar gehört, als das Schnittpunktpixel.

3. Verfahren nach Anspruch 1 oder 2, wobei das Scheibenpaar eine erste Scheibe und eine zweite Scheibe umfasst; und das Erzeugen (105) des Segmentierungsergebnisses für das Scheibenpaar auf der Grundlage der Korrelationsinformation und der anfänglichen Segmentierungsergebnisse für die Scheiben in dem Scheibenpaar umfasst:

   Vorhersagen eines Segmentierungsergebnisses für die zweite Scheibe gemäß der Korrelationsinformation und einem anfänglichen Segmentierungsergebnis für die erste Scheibe, um ein vorhergesagtes Segmentierungsergebnis für die zweite Scheibe zu erhalten;

Vorhersage eines Segmentierungsergebnisses für die erste Scheibe gemäß der Korrelationsinformation und einem anfänglichen Segmentierungsergebnis für die zweite Scheibe, um ein vorhergesagtes Segmentierungsergebnis für die erste Scheibe zu erhalten;

Anpassen des anfänglichen Segmentierungsergebnisses für die erste Scheibe basierend auf dem vorhergesagten Segmentierungsergebnis für die erste Scheibe, um ein angepasstes Segmentierungsergebnis für die erste Scheibe zu erhalten;

Anpassen des anfänglichen Segmentierungsergebnisses für die zweite Scheibe auf der Grundlage des vorhergesagten Segmentierungsergebnisses für die zweite Scheibe, um ein angepasstes Segmentierungsergebnis für die zweite Scheibe zu erhalten; und

Verschmelzen des angepassten Segmentierungsergebnisses für die erste Scheibe und des angepassten Segmentierungsergebnisses für die zweite Scheibe, um das Segmentierungsergebnis für das Scheibenpaar zu erhalten.

4. Verfahren nach Anspruch 3, wobei das Anpassen des anfänglichen Segmentierungsergebnisses für die erste Scheibe basierend auf dem vorhergesagten Segmentierungsergebnis für die erste Scheibe, um das angepasste Segmentierungsergebnis für die erste Scheibe zu erhalten, umfasst:

Mittelwertbildung des vorhergesagten Segmentierungsergebnisses für die erste Scheibe und des anfänglichen Segmentierungsergebnisses für die erste Scheibe, um das angepasste Segmentierungsergebnis für die erste Scheibe zu erhalten; und

wobei das Anpassen des anfänglichen Segmentierungsergebnisses für die zweite Scheibe basierend auf dem vorhergesagten Segmentierungsergebnis für die zweite Scheibe, um das angepasste Segmentierungsergebnis für die zweite Scheibe zu erhalten, umfasst:

Mittelwertbildung des vorhergesagten Segmentierungsergebnisses für die zweite Scheibe und des anfänglichen Segmentierungsergebnisses für die zweite Scheibe, um das angepasste Segmentierungsergebnis für die zweite Scheibe zu erhalten.

5. Verfahren nach Anspruch 3, wobei das Verschmelzen des angepassten Segmentierungsergebnisses für die erste Scheibe und des angepassten Segmentierungsergebnisses für die zweite Scheibe, um das Segmentierungsergebnis für das Scheibenpaar zu erhalten, umfasst:

Mittelwertbildung des angepassten Segmentierungsergebnisses für die erste Scheibe und des angepassten Segmentierungsergebnisses für die zweite Scheibe und Binarisierung eines Ergebnisses der Mittelwertbildung, um das Segmentierungsergebnis für das Scheibenpaar zu erhalten.

6. Verfahren nach Anspruch 1 oder 2, wobei das Durchführen der Merkmalsextraktion an jeder Scheibe des Scheibenpaars auf der Grundlage unterschiedlicher rezeptiver Felder zum Erhalten der High-Level-Merkmalsinformation und der Low-Level-Merkmalsinformation jeder Scheibe des Scheibenpaars umfasst:

Durchführen der Merkmalsextraktion an jeder Scheibe des Scheibenpaars durch ein Residualnetzwerk in einem trainierten Segmentierungsmodell, um die High-Level-Merkmalsinformation und die Low-Level-Merkmalsinformation jeder Scheibe zu erhalten

wobei das Segmentieren des Zielobjekts in jeder Scheibe des Scheibenpaars gemäß der Low-Level-Merkmalsinformation und der High-Level-Merkmalsinformation der Scheibe, um das anfängliche Segmentierungsergebnis für die Scheibe zu erhalten, umfasst:

Segmentieren des Zielobjekts in jeder Scheibe des Scheibenpaars durch ein Segmentierungsnetzwerk in dem trainierten Segmentierungsmodell gemäß der Low-Level-Merkmalsinformation und der High-Level-Merkmalsinformation der Scheibe, um das anfängliche Segmentierungsergebnis für die Scheibe zu erhalten; und

wobei das Verschmelzen der Low-Level-Merkmalsinformation und der High-Level-Merkmalsinformation der Scheibe des Scheibenpaars und das Bestimmen der Korrelationsinformation zwischen den Scheiben des Scheibenpaars gemäß der verschmolzenen Merkmalsinformation umfasst:

Verschmelzen der Low-Level-Merkmalsinformation und der High-Level-Merkmalsinformation der Scheiben des Scheibenpaars und Bestimmen der Korrelationsinformation zwischen den Scheiben des Scheibenpaars gemäß der verschmolzenen Merkmalsinformation durch ein Verschmelzungsnetzwerk in dem trainierten Segmentierungsmodell.

7. Verfahren nach Anspruch 6, wobei das Verschmelzen der Low-Level-Merkmalsinformation und der High-Level-Merkmalsinformation der Scheiben des Scheibenpaars durch das Verschmelzungsnetzwerk in dem trainierten Segmentierungsmodell umfasst:

Summieren der Low-Level-Merkmalsinformation der Scheiben des Scheibenpaars elementweise, um die verschmolzene Low-Level-Merkmalsinformation zu erhalten;

Summieren der High-Level-Merkmalsinformation der Scheiben des Scheibenpaars elementweise, um die verschmolzene High-Level-Merkmalsinformation zu erhalten; und

Verschmelzen der verschmolzenen Low-Level-Merkmalsinformation und der verschmolzenen High-Level-Merkmalsinformation durch das Verschmelzungsnetzwerk in dem trainierten Segmentierungsmodell, um die verschmolzene Merkmalsinformation zu erhalten.

**8.** Verfahren nach Anspruch 7, wobei das Verschmelzen der verschmolzenen Low-Level-Merkmalsinformation und der verschmolzenen High-Level-Merkmalsinformation durch das Verschmelzungsnetzwerk in dem trainierten Segmentierungsmodell, um die verschmolzene Merkmalsinformation zu erhalten:

Summieren der verschmolzenen Low-Level-Merkmalsinformation und der verschmolzenen High-Level-Merkmalsinformation elementweise durch das Verschmelzungsnetzwerk in dem trainierten Segmentierungsmodell, um die verschmolzene Merkmalsinformation zu erhalten; oder

Zuweisen eines Gewichts zu der verschmolzenen Low-Level-Merkmalsinformation gemäß der verschmolzenen Low-Level-Merkmalsinformation und der verschmolzenen High-Level-Merkmalsinformation durch ein Kanalaufmerksamkeitsmodul in dem Verschmelzungsnetzwerk des trainierten Segmentierungsmodells, um eine gewichtete Merkmalsinformation zu erhalten;

Multiplizieren der gewichteten Merkmalsinformation elementweise mit der verschmolzenen Low-Level-Merkmalsinformation, um verarbeitete Merkmalsinformation zu erhalten; und Summieren der verarbeiteten Merkmalsinformation und der verschmolzenen High-Level-Merkmalsinformation elementweise, um die verschmolzene Merkmalsinformation zu erhalten.

**9.** Verfahren nach Anspruch 6, wobei vor der Durchführung der Merkmalsextraktion an jeder Scheibe des Scheibenpaars durch das Residualnetzwerk in dem trainierten Segmentierungsmodell, um die High-Level-Merkmalsinformation und die Low-Level-Merkmalsinformation jeder Scheibe zu erhalten, das Verfahren ferner umfasst:

Erfassen mehrerer Probenscheibenpaare, die mit tatsächlichen Werten annotiert sind, wobei jedes Probenscheibenpaar zwei Probenscheiben umfasst, die durch Abtasten eines medizinischen Probenbildes erhalten werden;

Durchführen einer Merkmalsextraktion an jeder Probenscheibe des Probenscheibenpaars durch ein Residualnetzwerk in einem voreingestellten Segmentierungsmodell, um eine High-Level-Merkmalsinformation und eine Low-Level-Merkmalsinformation jeder Probenscheibe zu erhalten;

Segmentieren eines Zielobjekts in jeder Probenscheibe des Probenscheibenpaars durch ein Segmentierungsnetzwerk in dem voreingestellten Segmentierungsmodell gemäß der Low-Level-Merkmalsinformation und der High-Level-Merkmalsinformation der genannten Probenscheibe, um einen vorhergesagten Segmentierungswert der genannten Probenscheibe zu erhalten;

Verschmelzen der Low-Level-Merkmalsinformation und der High-Level-Merkmalsinformation der Probenscheiben des Probenscheibenpaars durch ein Verschmelzungsnetzwerk in dem voreingestellten Segmentierungsmodell und Vorhersagen von einer Korrelationsinformation zwischen den Probenscheiben des Probenscheibenpaars gemäß der verschmolzenen Merkmalsinformation; und

Konvergieren des voreingestellten Segmentierungsmodells gemäß den tatsächlichen Werten, den vorhergesagten Segmentierungswerten der Probenscheiben des Probenscheibenpaars und der vorhergesagten Korrelationsinformation, um das trainierte Segmentierungsmodell zu erhalten.

**10.** Elektronisches Gerät, das einen Speicher und einen Prozessor umfasst, wobei:

der Speicher ein Anwendungsprogramm speichert, und

der Prozessor so konfiguriert ist, dass er das Anwendungsprogramm in dem Speicher ausführt, um das Verfahren nach einem der Ansprüche 1 bis 9 durchzuführen.

**11.** Speichermedium, das eine Vielzahl von Befehlen speichert, die, wenn sie von einem Prozessor ausgeführt werden: den Prozessor zur Durchführung des Verfahrens nach einem der Ansprüche 1 bis 9 veranlassen.

**EP 3 961 484 B1**

## Revendications

1. Procédé pour segmenter une image médicale, comprenant :

   l'obtention (101) d'une paire de coupes, dans lequel la paire de coupes comprend deux coupes obtenues en échantillonnant une image médicale devant être segmentée ;
   la réalisation (102) d'une extraction de caractéristiques sur chaque coupe dans la paire de coupes sur la base de différents champs réceptifs par le biais d'un réseau neuronal convolutif pour obtenir des informations de caractéristiques de haut niveau et des informations de caractéristiques de bas niveau de chaque coupe dans la paire de coupes, dans lequel les informations de caractéristiques de haut niveau et les informations de caractéristiques de bas niveau sont des cartes de caractéristiques ;
   la segmentation (103) d'un objet cible dans chaque coupe dans la paire de coupes conformément aux informations de caractéristiques de bas niveau et aux informations de caractéristiques de haut niveau de ladite coupe, pour obtenir un résultat de segmentation initial pour ladite coupe ;
   la fusion (104) des informations de caractéristiques de bas niveau et des informations de caractéristiques de haut niveau des coupes dans la paire de coupes pour obtenir des informations de caractéristiques fusionnées, et la détermination (105) d'informations de corrélation entre les coupes dans la paire de coupes conformément aux informations de caractéristiques fusionnées ; et
   la génération (106) d'un résultat de segmentation pour la paire de coupes, sur la base des informations de corrélation et des résultats de segmentation initiaux pour les coupes dans la paire de coupes ;
   dans lequel la segmentation (103) de l'objet cible dans chaque coupe dans la paire de coupes conformément aux informations de caractéristiques de bas niveau et aux informations de caractéristiques de haut niveau de ladite coupe comprend, pour chaque coupe dans la paire de coupes :

   la réalisation d'une convolution séparément sur les informations de caractéristiques de bas niveau et les informations de caractéristiques de haut niveau de ladite coupe par le biais du réseau de segmentation dans le modèle de segmentation entraîné ;
   le suréchantillonnage des informations de caractéristiques de haut niveau soumises à la convolution jusqu'à une même taille que les informations de caractéristiques de bas niveau soumises à la convolution ;
   la concaténation des informations de caractéristiques de haut niveau suréchantillonnées et des informations de caractéristiques de bas niveau soumises à la convolution pour obtenir des informations de caractéristiques concaténées ; et
   le suréchantillonnage des informations de caractéristiques concaténées, qui sont soumises à une autre convolution, jusqu'à une taille de ladite coupe pour obtenir le résultat de segmentation initial pour ladite coupe ;

   dans lequel la détermination (105) des informations de corrélation entre les coupes dans la paire de coupes conformément aux informations de caractéristiques fusionnées comprend :

   la sélection d'une caractéristique appartenant à l'objet cible à partir des informations de caractéristiques fusionnées ;
   la détermination d'une région d'arrière-plan et d'une région d'avant-plan de chaque coupe dans la paire de coupes conformément à la caractéristique sélectionnée, dans lequel la région d'avant-plan est une région ayant l'objet cible dans ladite coupe et la région d'arrière-plan est une région autre que la région d'avant-plan dans ladite coupe ;
   le calcul d'un pixel de différence et d'un pixel d'intersection entre les régions d'avant-plan des coupes dans la paire de coupes ; et
   l'étiquetage d'un type de pixel pour la région d'arrière-plan, le pixel de différence et le pixel d'intersection, pour obtenir les informations de corrélation entre les coupes dans la paire de coupes.

2. Procédé selon la revendication 1, dans lequel le calcul du pixel de différence et du pixel d'intersection entre les régions d'avant-plan des coupes dans la paire de coupes comprend :

   la détermination, dans les informations de caractéristiques fusionnées, d'un pixel appartenant à la région d'avant-plan de seulement l'une ou l'autre coupe dans la paire de coupes en tant que pixel de différence ; et
   la détermination, dans les informations de caractéristiques fusionnées, d'un pixel appartenant aux régions d'avant-plan des deux coupes dans la paire de coupes en tant que pixel d'intersection.

**3.** Procédé selon la revendication 1 ou 2, dans lequel la paire de coupes comprend une première coupe et une deuxième coupe ; et la génération (105) du résultat de segmentation pour la paire de coupes sur la base des informations de corrélation et des résultats de segmentation initiaux pour les coupes dans la paire de coupes comprend :

la prédiction d'un résultat de segmentation pour la deuxième coupe conformément aux informations de corrélation et à un résultat de segmentation initial pour la première coupe, pour obtenir un résultat de segmentation prédit pour la deuxième coupe ;
la prédiction d'un résultat de segmentation pour la première coupe conformément aux informations de corrélation et à un résultat de segmentation initial pour la deuxième coupe, pour obtenir un résultat de segmentation prédit pour la première coupe ;
l'ajustement du résultat de segmentation initial pour la première coupe sur la base du résultat de segmentation prédit pour la première coupe, pour obtenir un résultat de segmentation ajusté pour la première coupe ;
l'ajustement du résultat de segmentation initial pour la deuxième coupe sur la base du résultat de segmentation prédit pour la deuxième coupe, pour obtenir un résultat de segmentation ajusté pour la deuxième coupe ; et
la fusion du résultat de segmentation ajusté pour la première coupe et du résultat de segmentation ajusté pour la deuxième coupe, pour obtenir le résultat de segmentation pour la paire de coupes.

**4.** Procédé selon la revendication 3, dans lequel l'ajustement du résultat de segmentation initial pour la première coupe sur la base du résultat de segmentation prédit pour la première coupe pour obtenir le résultat de segmentation ajusté pour la première coupe comprend :

le calcul de la moyenne du résultat de segmentation prédit pour la première coupe et du résultat de segmentation initial pour la première coupe, pour obtenir le résultat de segmentation ajusté pour la première coupe ; et
dans lequel l'ajustement du résultat de segmentation initial pour la deuxième coupe sur la base du résultat de segmentation prédit pour la deuxième coupe, pour obtenir le résultat de segmentation ajusté pour la deuxième coupe, comprend :
le calcul de la moyenne du résultat de segmentation prédit pour la deuxième coupe et du résultat de segmentation initial pour la deuxième coupe, pour obtenir le résultat de segmentation ajusté pour la deuxième coupe.

**5.** Procédé selon la revendication 3, dans lequel la fusion du résultat de segmentation ajusté pour la première coupe et du résultat de segmentation ajusté pour la deuxième coupe pour obtenir le résultat de segmentation pour la paire de coupes comprend :
le calcul de la moyenne du résultat de segmentation ajusté pour la première coupe et du résultat de segmentation ajusté pour la deuxième coupe, et la binarisation d'un résultat du calcul de la moyenne, pour obtenir le résultat de segmentation pour la paire de coupes.

**6.** Procédé selon la revendication 1 ou 2, dans lequel la réalisation de l'extraction de caractéristiques sur chaque coupe dans la paire de coupes sur la base de différents champs réceptifs pour obtenir les informations de caractéristiques de haut niveau et les informations de caractéristiques de bas niveau de chaque coupe dans la paire de coupes comprend :
la réalisation de l'extraction de caractéristiques sur chaque coupe dans la paire de coupes par le biais d'un réseau résiduel dans un modèle de segmentation entraîné, pour obtenir les informations de caractéristiques de haut niveau et les informations de caractéristiques de bas niveau de chaque coupe ;

dans lequel la segmentation de l'objet cible dans chaque coupe dans la paire de coupes conformément aux informations de caractéristiques de bas niveau et aux informations de caractéristiques de haut niveau de ladite coupe pour obtenir le résultat de segmentation initial pour ladite coupe comprend :
la segmentation de l'objet cible dans chaque coupe dans la paire de coupes par le biais d'un réseau de segmentation dans le modèle de segmentation entraîné, conformément aux informations de caractéristiques de bas niveau et aux informations de caractéristiques de haut niveau de ladite coupe, pour obtenir le résultat de segmentation initial pour ladite coupe ; et
dans lequel la fusion des informations de caractéristiques de bas niveau et des informations de caractéristiques de haut niveau des coupes dans la paire de coupes et la détermination des informations de corrélation entre les coupes dans la paire de coupes conformément aux informations de caractéristiques fusionnées comprennent :
la fusion des informations de caractéristiques de bas niveau et des informations de caractéristiques de haut niveau des coupes dans la paire de coupes et la détermination des informations de corrélation entre les coupes dans la paire de coupes conformément aux informations de caractéristiques fusionnées, par le biais d'un réseau de fusion dans le modèle de segmentation entraîné.

**7.** Procédé selon la revendication 6, dans lequel la fusion des informations de caractéristiques de bas niveau et des informations de caractéristiques de haut niveau des coupes dans la paire de coupes par le biais du réseau de fusion dans le modèle de segmentation entraîné comprend :

le calcul de la somme des informations de caractéristiques de bas niveau des coupes dans la paire de coupes élément par élément, pour obtenir des informations de caractéristiques de bas niveau fusionnées ;
le calcul de la somme des informations de caractéristiques de haut niveau des coupes dans la paire de coupes élément par élément, pour obtenir des informations de caractéristiques de haut niveau fusionnées ; et
la fusion des informations de caractéristiques de bas niveau fusionnées et des informations de caractéristiques de haut niveau fusionnées par le biais du réseau de fusion dans le modèle de segmentation entraîné, pour obtenir les informations de caractéristiques fusionnées.

**8.** Procédé selon la revendication 7, dans lequel la fusion des informations de caractéristiques de bas niveau fusionnées et des informations de caractéristiques de haut niveau fusionnées par le biais du réseau de fusion dans le modèle de segmentation entraîné pour obtenir les informations de caractéristiques fusionnées comprend :

le calcul de la somme des informations de caractéristiques de bas niveau fusionnées et des informations de caractéristiques de haut niveau fusionnées élément par élément par le biais du réseau de fusion dans le modèle de segmentation entraîné, pour obtenir les informations de caractéristiques fusionnées ; ou
l'attribution d'un poids aux informations de caractéristiques de bas niveau fusionnées conformément aux informations de caractéristiques de bas niveau fusionnées et aux informations de caractéristiques de haut niveau fusionnées par le biais d'un module d'attention de canal dans le réseau de fusion dans le modèle de segmentation entraîné, pour obtenir des informations de caractéristiques pondérées ; la multiplication des informations de caractéristiques pondérées élément par élément avec les informations de caractéristiques de bas niveau fusionnées, pour obtenir des informations de caractéristiques traitées ; et le calcul de la somme des informations de caractéristiques traitées et des informations de caractéristiques de haut niveau fusionnées élément par élément, pour obtenir les informations de caractéristiques fusionnées.

**9.** Procédé selon la revendication 6, dans lequel avant la réalisation de l'extraction de caractéristiques sur chaque coupe dans la paire de coupes par le biais du réseau résiduel dans le modèle de segmentation entraîné, pour obtenir les informations de caractéristiques de haut niveau et les informations de caractéristiques de bas niveau de chaque coupe, le procédé comprend en outre :

l'acquisition d'une pluralité de paires de coupes d'échantillon annotées avec des valeurs réelles, dans lequel chaque paire de coupes d'échantillon comprend deux coupes d'échantillon obtenues en échantillonnant une image médicale d'échantillon ;
la réalisation d'une extraction de caractéristiques sur chaque coupe d'échantillon dans la paire de coupes d'échantillon par le biais d'un réseau résiduel dans un modèle de segmentation prédéfini, pour obtenir des informations de caractéristiques de haut niveau et des informations de caractéristiques de bas niveau de chaque coupe d'échantillon ;
la segmentation d'un objet cible dans chaque coupe d'échantillon dans la paire de coupes d'échantillon par le biais d'un réseau de segmentation dans le modèle de segmentation prédéfini, conformément aux informations de caractéristiques de bas niveau et aux informations de caractéristiques de haut niveau de ladite coupe d'échantillon, pour obtenir une valeur de segmentation prédite de ladite coupe d'échantillon ;
la fusion des informations de caractéristiques de bas niveau et des informations de caractéristiques de haut niveau des coupes d'échantillon dans la paire de coupes d'échantillon par le biais d'un réseau de fusion dans le modèle de segmentation prédéfini, et la prédiction d'informations de corrélation entre les coupes d'échantillon dans la paire de coupes d'échantillon conformément aux informations de caractéristiques fusionnées ; et
la convergence du modèle de segmentation prédéfini conformément aux valeurs réelles, aux valeurs de segmentation prédites des coupes d'échantillon dans la paire de coupes d'échantillon et aux informations de corrélation prédites, pour obtenir le modèle de segmentation entraîné.

**10.** Dispositif électronique, comprenant une mémoire et un processeur, dans lequel :

la mémoire stocke un programme d'application, et
le processeur est configuré pour faire tourner le programme d'application dans la mémoire, pour réaliser le procédé selon l'une quelconque des revendications 1 à 9.

11. Support de stockage, stockant une pluralité d'instructions qui, lorsqu'elles sont exécutées par un processeur, amènent :
le processeur à réaliser le procédé selon l'une quelconque des revendications 1 à 9.

Figure 1

Obtain a slice pair, where the slice pair includes two slices obtained through sampling on a to-be-segmented medical image 〜101

Perform feature extraction on each slice in the slice pair based on different receptive fields, to obtain high-level feature information and low-level feature information of each slice in the slice pair 〜102

Segment a target object in each slice in the slice pair according to the low-level feature information and the high-level feature information of said slice, to obtain an initial segmentation result for said slice 103〜

Fuse the low-level feature information and the high-level feature information of the slices in the slice pair 〜104

Determine correlation information between the slices in the slice pair according to the fused feature information 〜105

Generate a segmentation result for the slice pair based on the correlation information between the slices in the slice pair and the initial segmentation results for the slices in the slice pair 〜106

## Figure 2

$C_4$

$C_3$

$C_2$

$C_1$

Pixel

## Figure 3

Figure 4

Figure 5

One channel

Figure 6

Fused high-level
feature
information

Weight

Fused low-level
feature information

Processed feature
information

Mul

Channel attention module

Figure 7

Figure 8

Figure 9

Figure 10

An electronic device obtains a to-be-segmented medical image — 201

The electronic device samples two slices from the to-be-segmented medical image, to obtain a slice pair that needs to be segmented currently — 202

The electronic device performs the feature extraction on the slices in the slice pair through the residual network in the trained image segmentation model, to obtain high-level feature information and low-level feature information of each slice — 203

204 — The electronic device segments the target object in each slice in the slice pair through the segmentation network in the trained image segmentation model, according to the low-level feature information and the high-level feature information of said slice, to obtain an initial segmentation result for said slice

The electronic device fuses the low-level feature information and the high-level feature information of the slices in the slice pair through the fusion network in the trained image segmentation model — 205

The electronic device determines correlation information between the slices in the slice pair according to the fused feature information through the fusion network in the trained image segmentation model — 206

The electronic device generates a segmentation result for the slice pair based on the correlation information between the slices in the slice pair and the initial segmentation results for the slices in the slice pair — 207

Figure 11

Figure 12

Figure 13

301 302 303 306

| Obtaining unit | Extraction unit | Segmentation unit | Generation unit |
|---|---|---|---|

| Acquisition unit | Training unit | Fusion unit | Determining unit |
|---|---|---|---|

307 308 304 305

## Figure 14

403 401

Power supply

402

Processor

Memory

Input unit

404

## Figure 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2019103227838
- WO 2018153319 A1